# EUROPEAN PATENT SPECIFICATION

(11) **EP 3 865 907 B1**
(45) Date of publication and mention of the grant of the patent: **04.03.2026**
(21) Application number: 19871506.2
(22) Date of filing: 07.10.2019
(51) Int. Cl.: G01S 7/02, G01S 13/87, G01S 13/34, G01S 13/44, G01S 13/58, G01S 13/931, G01S 7/48, G01S 17/42, G01S 17/87, G01S 17/931

(54) **ELECTRONIC DEVICE, METHOD FOR CONTROLLING ELECTRONIC DEVICE, AND PROGRAM FOR CONTROLLING ELECTRONIC DEVICE**
ELEKTRONISCHE VORRICHTUNG, VERFAHREN ZUM STEUERN DER ELEKTRONISCHEN VORRICHTUNG UND PROGRAMM ZUM STEUERN DER ELEKTRONISCHEN VORRICHTUNG
DISPOSITIF ÉLECTRONIQUE, PROCÉDÉ DE COMMANDE DE DISPOSITIF ÉLECTRONIQUE ET PROGRAMME DE COMMANDE DE DISPOSITIF ÉLECTRONIQUE

(30) Priority: 12.10.2018 JP 2018193350
(43) Date of publication of application: 18.08.2021
(73) Proprietor: Kyocera Corporation, Kyoto-shi, Kyoto 612-8501 (JP)
(72) Inventor: KAWAJI Satoshi, Kyoto-shi, Kyoto 612-8501 (JP); SAHARA Tooru, Kyoto-shi, Kyoto 612-8501 (JP); NISHIKIDO Masamitsu, Kyoto-shi, Kyoto 612-8501 (JP); MURAKAMI Youhei, Kyoto-shi, Kyoto 612-8501 (JP); HOMMA Takuya, Kyoto-shi, Kyoto 612-8501 (JP); SATO Masayuki, Kyoto-shi, Kyoto 612-8501 (JP)
(74) Representative: Viering, Jentschura & Partner mbB Patent- und Rechtsanwälte
(86) International application number: PCT/JP2019/039539
(87) International publication number: WO 2020/075686

(56) References cited:
- WO-A1-2016/042697
- WO-A1-2018/074426
- JP-A- 2005 165 752
- JP-A- 2005 500 537
- JP-A- 2008 271 383
- JP-A- H05 196 736
- JP-A- H05 196 736
- JP-A- H08 262 133
- JP-A- H11 301 383
- JP-U- H0 592 768
- JP-U- H0 592 769
- US-A1- 2002 147 534
- US-A1- 2017 285 165
- US-A1- 2018 159 647
- US-A1- 2018 217 255

## Description

### TECHNICAL FIELD

The present disclosure relates to an electronic device, a control method of an electronic device, and a control program of an electronic device.

### BACKGROUND

In fields such as automobile-related industry, techniques of measuring, for example, the distance between a vehicle and a certain object are considered important. In particular, various techniques of radar (radio detecting and ranging) that measures, for example, the distance from an object such as an obstacle by transmitting radio waves such as millimeter waves and receiving reflected waves reflected off the object are studied in recent years. The importance of such techniques of measuring distance and the like is expected to further increase in the future, with the development of techniques of assisting the driver in driving and techniques related to automated driving whereby driving is wholly or partly automated.

There are also several proposals for techniques of detecting the presence of a certain object by providing a plurality of sensors for receiving reflected waves resulting from reflection of transmitted radio waves off the object. As an example, WO 2010/140239 A1 (PTL 1) discloses a technique of monitoring the surroundings of a vehicle with reduced processing load using a plurality of monitoring sensors for monitoring different regions around the vehicle. As another example, JP 2018-67237 A (PTL 2) discloses a technique of performing a predetermined process on each of a plurality of output values output from a plurality of sensors based on a priority that is set depending on the angle between a reference direction on a road around a vehicle and the direction of the vehicle.
US 2018/159647 A1 discloses a method for synchronizing devices in a vehicle that may make use of the Controller Area Network (CAN) communication bus. A bus interface of each of two or more devices coupled to the bus may be configured to accept a same message broadcast via the communication bus, in which the message has a specific message identification (ID) header. A message may be received from the communication bus that has the specific message ID simultaneously by each of the two or more devices. Operation of the two or more devices may be synchronized by triggering a task on each of the two or more devices in response to receiving the message having the specific message ID.
WO 2018/074426 A1 discloses an execution unit configured to execute control of operation performance of multiple sensors for monitoring different areas around a vehicle and/or predetermined processing of multiple output values output from the multiple sensors. A determination unit is configured so as to determine the orientation of the vehicle with respect to a reference direction preset on the basis of roads in the vicinity of the vehicle. A setting unit is configured so as to set the priorities of the multiple sensors in accordance with the orientation of the vehicle determined by the determination unit. The execution unit changes the ratios of the operation performance of the multiple sensors and/or the ratios of the processing amounts of the multiple output values on the basis of the priorities.
US 2002/147534 A1 discloses a near object detection (NOD) system including a plurality of sensors, each of the sensors for providing detection coverage in a predetermined coverage zone. Each of the sensors includes a transmit antenna for transmitting a first RF signal, a receive antenna for receiving a second RF signal and a means for sharing the target data between each of the plurality of sensors in the NOD system.
US 2017/285165 A1 discloses a method for operating a plurality of radar sensors in a motor vehicle, wherein at least one operational parameter of the radar sensors can be changed, wherein driving situation data describing a current driving situation of the motor vehicle are analyzed in order to determine a requirements profile for the sensor data of the radar sensors and wherein the operational parameters of the radar sensors are adapted to the requirements profile taking into consideration at least the detection properties of all radar sensors.
JP H05 196736 A discloses a navigation system which stores map information and road information, detects an automobile position, and sends curved path data to a signal processing circuit when there is a curved path in front of the automobile, wherein the signal processing circuit determines an obstacle sensing range suitable for the curved path to change an application direction of a laser radar head and also drives an alarm device by determining a degree of danger from a distance to an object based on an elapsed time from the transmission of a light beam by the radar head until an input of reflected light and from a speed obtained by a speed sensor.

### CITATION LIST

### Patent Literature

PTL 1: WO 2010/140239 A1
PTL 2: JP 2018-67237 A

### SUMMARY

According to the present invention, an electronic device according to claim 1, a control method of an electronic device according to claim 8, and a control program of an electronic device according to claim 9 are provided. Further embodiments are defined in the dependent claims.

### BRIEF DESCRIPTION OF THE DRAWINGS

In the accompanying drawings:
FIG. 1 is a diagram illustrating a use state of an electronic device according to an embodiment;
FIG. 2 is a functional block diagram schematically illustrating a structure of the electronic device according to the embodiment;
FIG. 3 is a diagram illustrating a structure of a transmission signal according to the embodiment;
FIG. 4 is a diagram illustrating an example of arrangement of transmission antennas and reception antennas in the electronic device according to the embodiment;
FIG. 5 is a diagram illustrating an operation of the electronic device according to the embodiment;
FIG. 6 is a block diagram illustrating a connection state of the electronic device according to the embodiment;
FIG. 7 is a diagram illustrating an operation of the electronic device according to the embodiment;
FIG. 8 is a diagram illustrating an operation of the electronic device according to the embodiment;
FIG. 9 is a diagram illustrating an operation of the electronic device according to the embodiment;
FIG. 10 is a diagram illustrating an operation of the electronic device according to the embodiment;
FIG. 11 is a diagram illustrating an operation of the electronic device according to the embodiment;
FIG. 12 is a diagram illustrating an operation of the electronic device according to the embodiment; and
FIG. 13 is a flowchart illustrating an operation of the electronic device according to the embodiment.

### DETAILED DESCRIPTION

It is desirable to improve convenience in techniques of detecting a certain object by providing a plurality of sensors for receiving reflected waves resulting from reflection of transmitted transmission waves off the object. It could therefore be helpful to provide an electronic device, a control method of an electronic device, and a control program of an electronic device that can improve convenience in object detection by a plurality of sensors. According to an embodiment, it is possible to provide an electronic device, a control method of an electronic device, and a control program of an electronic device that can improve convenience in object detection by a plurality of sensors. One of the disclosed embodiments will be described in detail below, with reference to the drawings.

An electronic device according to an embodiment can be mounted in a vehicle (mobile body) such as a car (automobile) to detect a certain object around the mobile body. The electronic device according to the embodiment can transmit transmission waves to the surroundings of the mobile body from a transmission antenna installed in the mobile body. The electronic device according to the embodiment can also receive reflected waves resulting from reflection of the transmission waves, by a reception antenna installed in the mobile body. At least one of the transmission antenna and the reception antenna may be included in, for example, a radar sensor installed in the mobile body.

The following will describe a structure in which the electronic device according to the embodiment is mounted in a car such as a passenger car, as a typical example. The electronic device according to the embodiment is, however, not limited to being mounted in a car. The electronic device according to the embodiment may be mounted in various mobile bodies such as a bus, a truck, a motorcycle, a bicycle, a ship, an airplane, an ambulance, a fire engine, a helicopter, and a drone. The electronic device according to the embodiment is not limited to being mounted in a mobile body that moves with its own power. For example, the mobile body in which the electronic device according to the embodiment is mounted may be a trailer portion towed by a tractor. The electronic device according to the embodiment can measure, for example, the distance between the sensor and the object in a situation in which at least one of the sensor and the object can move. The electronic device according to the embodiment can also measure, for example, the distance between the sensor and the object when both the sensor and the object are stationary.

An example of object detection by the electronic device according to the embodiment will be described below.

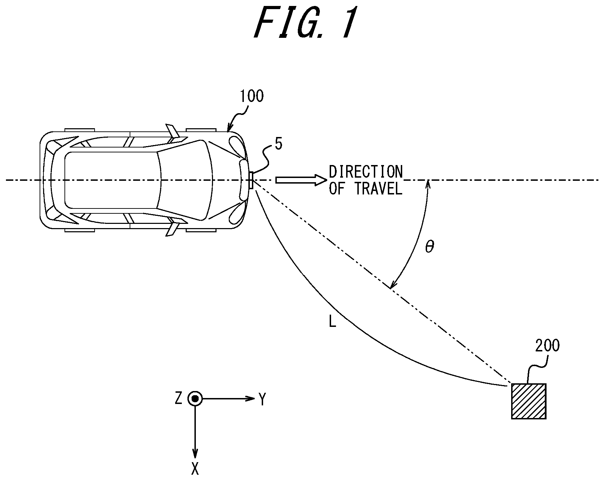

FIG. 1 is a diagram illustrating a use state of the electronic device according to the embodiment. FIG. 1 illustrates an example in which a sensor including a transmission antenna and a reception antenna according to the embodiment is installed in a mobile body.

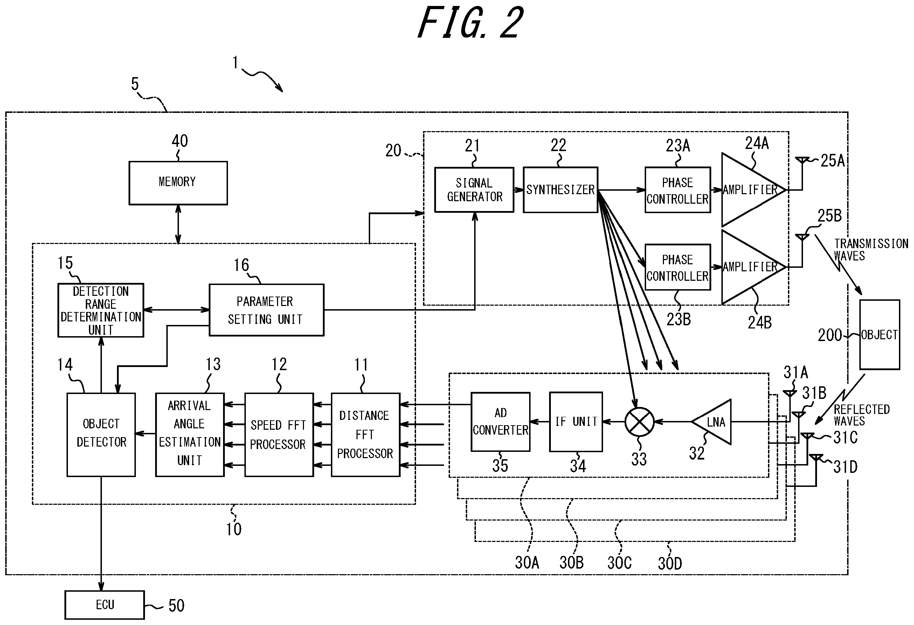

A sensor 5 including a transmission antenna and a reception antenna according to the embodiment is installed in a mobile body 100 illustrated in FIG. 1. An electronic device 1 according to the embodiment is mounted (e.g. included) in the mobile body 100 illustrated in FIG. 1. A specific structure of the electronic device 1 will be described later. For example, the sensor 5 may include at least one of the transmission antenna and the reception antenna. The sensor 5 may include at least one of the other functional parts, such as at least part of a controller 10 (FIG. 2) included in the electronic device 1, as appropriate. The mobile body 100 illustrated in FIG. 1 may be a vehicle of a car such as a passenger car. The mobile body 100 illustrated in FIG. 1 may be any type of mobile body. In FIG. 1, for example, the mobile body 100 may move (run or slow down) in the Y-axis positive direction (direction of travel) in the drawing, move in other directions, or be stationary without moving.

As illustrated in FIG. 1, the sensor 5 including a transmission antenna is installed in the mobile body 100. In the example illustrated in FIG. 1, only one sensor 5 including a transmission antenna and a reception antenna is installed at the front of the mobile body 100. The position at which the sensor 5 is installed in the mobile body 100 is not limited to the position illustrated in FIG. 1, and may be any other position as appropriate. For example, the sensor 5 illustrated in FIG. 1 may be installed at the left, the right, and/or the back of the mobile body 100. The number of sensors 5 may be any number greater than or equal to 1, depending on various conditions (or requirements) such as the range and/or accuracy of measurement in the mobile body 100.

The sensor 5 transmits electromagnetic waves from the transmission antenna as transmission waves. For example, in the case where there is a certain object (e.g. an object 200 illustrated in FIG. 1) around the mobile body 100, at least part of the transmission waves transmitted from the sensor 5 is reflected off the object to become reflected waves. As a result of the reflected waves being received by, for example, the reception antenna of the sensor 5, the electronic device 1 mounted in the mobile body 100 can detect the object.

The sensor 5 including the transmission antenna may be typically a radar (radio detecting and ranging) sensor that transmits and receives radio waves. The sensor 5 is, however, not limited to a radar sensor. For example, the sensor 5 according to the embodiment may be a sensor based on a technique of lidar (light detection and ranging, laser imaging detection and ranging) by lightwaves. Such sensors may include, for example, patch antennas and the like. Since the techniques of radar and lidar are already known, detailed description is simplified or omitted as appropriate.

The electronic device 1 mounted in the mobile body 100 illustrated in FIG. 1 receives reflected waves of transmission waves transmitted from the transmission antenna in the sensor 5, by the reception antenna. Thus, the electronic device 1 can detect the object 200 present within a predetermined distance from the mobile body 100. For example, the electronic device 1 can measure the distance L between the mobile body 100 as the own vehicle and the object 200, as illustrated in FIG. 1. The electronic device 1 can also measure the relative speed of the mobile body 100 as the own vehicle and the object 200. The electronic device 1 can further measure the direction (arrival angle θ) in which the reflected waves from the object 200 reaches the mobile body 100 as the own vehicle.

The object 200 may be, for example, at least one of an oncoming car running in a lane adjacent to the mobile body 100, a car running parallel to the mobile body 100, and a car running ahead or behind in the same lane as the mobile body 100. The object 200 may be any object around the mobile body 100, such as a motorcycle, a bicycle, a stroller, a pedestrian, a guardrail, a median strip, a road sign, a manhole, a slope, a sidewalk step, a wall, and an obstacle. The object 200 may be moving or stopped. For example, the object 200 may be a car parked or stopped around the mobile body 100. The object 200 is not limited to being on a roadway, and may be in any appropriate location such as a sidewalk, a farm, farmland, a parking lot, a vacant lot, a space on a road, inside a store, a pedestrian crossing, on water, in the air, a gutter, a river, inside another mobile body, a building, or inside or outside of any other structure. In the present disclosure, examples of the object 200 detected by the sensor 5 include not only non-living objects but also living objects such as humans, dogs, cats, horses, and other animals. In the present disclosure, the object 200 detected by the sensor 5 includes a target such as a human, a thing, or an animal detected by radar technology.

In FIG. 1, the ratio between the size of the sensor 5 and the size of the mobile body 100 does not necessarily represent the actual ratio. In FIG. 1, the sensor 5 is installed on the outside of the mobile body 100. However, in an embodiment, the sensor 5 may be installed at any of various locations in the mobile body 100. For example, in an embodiment, the sensor 5 may be installed inside the bumper of the mobile body 100 so as not to be seen from outside. The sensor 5 may be installed inside the mobile body 100, such as a space inside a bumper, a space inside a headlight, or a driving space.

It is assumed here that the transmission antenna in the sensor 5 transmits radio waves in a frequency band such as millimeter waves (30 GHz or more) or submillimeter waves (e.g. about 20 GHz to 30 GHz), as a typical example. For example, the transmission antenna in the sensor 5 may transmit radio waves with a frequency bandwidth of 4 GHz, e.g. 77 GHz to 81 GHz.

FIG. 2 is a functional block diagram schematically illustrating an example of the structure of the electronic device 1 according to the embodiment. The example of the structure of the electronic device 1 according to the embodiment will be described below.

When measuring distance or the like by millimeter wave radar, frequency-modulated continuous wave radar (hereafter, "FMCW radar") is often used. FMCW radar sweeps the frequency of transmitted radio waves to generate a transmission signal. Therefore, for example, in millimeter-wave FMCW radar using radio waves in a frequency band of 79 GHz, the radio waves used have a frequency bandwidth of 4 GHz, e.g. 77 GHz to 81 GHz. Radar of 79 GHz in frequency band has a feature that its usable frequency bandwidth is broader than that of other millimeter wave/submillimeter wave radar of 24 GHz, 60 GHz, 76 GHz, etc. in frequency band. This embodiment will be described below. A radar system of FMCW radar used in the present disclosure may include a fast-chirp modulation (FCM) system that transmits a chirp signal in a cycle shorter than normal. The signal generated by the signal generator 21 is not limited to a FMCW signal. The signal generated by the signal generator 21 may be a signal of any of various systems other than FMCW. A transmission signal sequence stored in the memory 40 may be different depending on the system used. For example, in the case of a FMCW radar signal, a signal whose frequency increases and a signal whose frequency decreases for each time sample may be used. Well-known techniques can be appropriately applied to the foregoing various systems, and therefore more detailed description is omitted.

The electronic device 1 according to the embodiment includes the sensor 5 and an electronic control unit (ECU) 50, as illustrated in FIG. 2. The ECU 50 controls various operations of the mobile body 100. The ECU 50 may be composed of one or more ECUs. The electronic device 1 according to the embodiment includes the controller 10. The electronic device 1 according to the embodiment may include other functional parts as appropriate, such as at least one of a transmitter 20, receivers 30A to 30D, and a memory 40. The electronic device 1 may include a plurality of receivers such as the receivers 30A to 30D, as illustrated in FIG. 2. Hereafter, in the case where the receivers 30A to 30D are not distinguished from one another, they are simply referred to as "receiver 30".

The controller 10 includes a distance FFT processor 11, a speed FFT processor 12, an arrival angle estimation unit 13, an object detector 14, a detection range determination unit 15, and a parameter setting unit 16. These functional parts included in the controller 10 will be described in detail later.

The transmitter 20 may include a signal generator 21, a synthesizer 22, phase controllers 23A and 23B, amplifiers 24A and 24B, and transmission antennas 25A and 25B, as illustrated in FIG. 2. Hereafter, in the case where the phase controllers 23A and 23B are not distinguished from each other, they are simply referred to as "phase controller 23". In the case where the amplifiers 24A and 24B are not distinguished from each other, they are simply referred to as "amplifier 24". In the case where the transmission antennas 25A and 25B are not distinguished from each other, they are simply referred to as "transmission antenna 25".

The respective receivers 30 may include corresponding reception antennas 31A to 31D, as illustrated in FIG. 2. Hereafter, in the case where the reception antennas 31A to 31D are not distinguished from one another, they are simply referred to as "reception antenna 31". The plurality of receivers 30 may each include a LNA 32, a mixer 33, an IF unit 34, and an AD converter 35, as illustrated in FIG. 2. The receivers 30A to 30D may have the same structure. FIG. 2 schematically illustrates only the structure of the receiver 30A as a typical example.

The sensor 5 may include, for example, the transmission antennas 25 and the reception antennas 31. The sensor 5 may include at least one of the other functional parts such as the controller 10, as appropriate.

The controller 10 included in the electronic device 1 according to the embodiment controls overall operation of the electronic device 1, including control of each of the functional parts included in the electronic device 1. The controller 10 may include at least one processor such as a central processing unit (CPU), to provide control and processing capacity for achieving various functions. The controller 10 may be implemented by one processor, by several processors, or by respective separate processors. Each processor may be implemented as a single integrated circuit (IC). Each processor may be implemented as a plurality of integrated circuits and/or discrete circuits communicably connected to one another. Each processor may be implemented based on any of other various known techniques. In an embodiment, the controller 10 may be implemented, for example, by a CPU and a program executed by the CPU. The controller 10 may include a memory necessary for the operation of the controller 10.

The memory 40 may store the program executed by the controller 10, results of processes performed by the controller 10, and the like. The memory 40 may function as a work memory of the controller 10. The memory 40 may be implemented, for example, by a semiconductor memory, a magnetic disk, or the like. The memory 40 is, however, not limited to such, and may be any storage device. For example, the memory 40 may be a storage medium such as a memory card inserted in the electronic device 1 according to the embodiment. The memory 40 may be an internal memory of the CPU used as the controller 10 as described above.

In an embodiment, the memory 40 may store various parameters for setting the range of object detection by the transmission waves T transmitted by the transmission antenna 25 and the reflected waves R received by the reception antenna 31. Such parameters will be described in detail later.

In the electronic device 1 according to the embodiment, the controller 10 can control at least one of the transmitter 20 and the receiver 30. In this case, the controller 10 may control at least one of the transmitter 20 and the receiver 30 based on various information stored in the memory 40. In the electronic device 1 according to the embodiment, the controller 10 may instruct the signal generator 21 to generate a signal, or control the signal generator 21 to generate a signal.

The signal generator 21 generates a signal (transmission signal) transmitted from the transmission antenna 25 as the transmission waves T, based on control by the controller 10. When generating the transmission signal, for example, the signal generator 21 may assign the frequency of the transmission signal based on control by the controller 10. Specifically, the signal generator 21 may assign the frequency of the transmission signal according to a parameter set by the parameter setting unit 16. For example, the signal generator 21 receives frequency information from the controller 10 (the parameter setting unit 16), and generates a signal of a predetermined frequency in a frequency band of 77 GHz to 81 GHz. The signal generator 21 may include a functional part such as a voltage controlled oscillator (VCO).

The signal generator 21 may be configured as hardware having the function, configured as a microcomputer or the like, or configured as a processor such as a CPU and a program executed by the processor. Each functional part described below may be configured as hardware having the function, or, if possible, configured as a microcomputer or the like or configured as a processor such as a CPU and a program executed by the processor.

In the electronic device 1 according to the embodiment, the signal generator 21 may generate a transmission signal (transmission chirp signal) such as a chirp signal. In particular, the signal generator 21 may generate a signal (linear chirp signal) whose frequency linearly changes periodically. For example, the signal generator 21 may generate a chirp signal whose frequency linearly increases periodically from 77 GHz to 81 GHz with time. For example, the signal generator 21 may generate a signal whose frequency periodically repeats a linear increase (up-chirp) and decrease (down-chirp) from 77 GHz to 81 GHz with time. The signal generated by the signal generator 21 may be, for example, set by the controller 10 beforehand. The signal generated by the signal generator 21 may be, for example, stored in the memory 40 or the like beforehand. Since chirp signals used in technical fields such as radar are already known, more detailed description is simplified or omitted as appropriate. The signal generated by the signal generator 21 is supplied to the synthesizer 22.

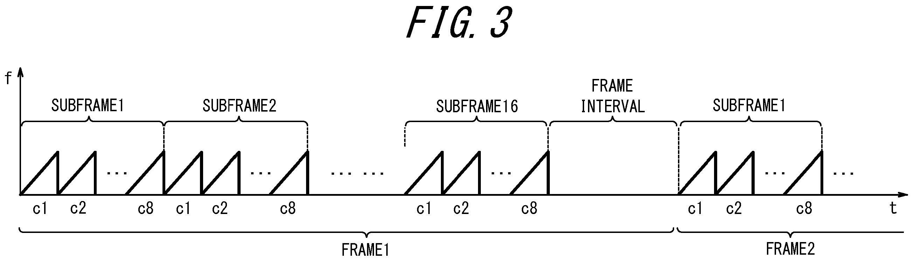

FIG. 3 is a diagram illustrating an example of a chirp signal generated by the signal generator 21.

In FIG. 3, the horizontal axis represents elapsed time, and the vertical axis represents frequency. In the example illustrated in FIG. 3, the signal generator 21 generates a linear chirp signal whose frequency linearly changes periodically. In FIG. 3, chirp signals are designated as c1, c2, ..., c8. In each chirp signal, the frequency increases linearly with time, as illustrated in FIG. 3.

In the example illustrated in FIG. 3, eight chirp signals, e.g. c1, c2, ..., c8, are included in one subframe. That is, each of subframes 1, 2, etc. illustrated in FIG. 3 is composed of eight chirp signals c1, c2, ..., c8. In the example illustrated in FIG. 3, 16 subframes, e.g. subframes 1 to 16, are included in one frame. That is, each of frames 1, 2, etc. illustrated in FIG. 3 is composed of 16 subframes. Predetermined frame intervals may be provided between the frames, as illustrated in FIG. 3.

In FIG. 3, each subsequent frame from the frame 2 may have the same structure. In FIG. 3, each subsequent frame from the frame 3 may have the same structure. In the electronic device 1 according to the embodiment, the signal generator 21 may generate a transmission signal of any number of frames. In FIG. 3, some chirp signals are omitted. The relationship between the time and the frequency of the transmission signal generated by the signal generator 21 may be stored, for example, in the memory 40.

Thus, the electronic device 1 according to the embodiment may transmit a transmission signal composed of subframes each of which includes a plurality of chirp signals. The electronic device 1 according to the embodiment may transmit a transmission signal composed of frames each of which includes a predetermined number of subframes.

In the following description, it is assumed that the electronic device 1 transmits a transmission signal of the frame structure illustrated in FIG. 3. The frame structure illustrated in FIG. 3 is, however, an example. For example, the number of chirp signals included in one subframe is not limited to 8. In an embodiment, the signal generator 21 may generate a subframe including any number (e.g. a plurality) of chirp signals. The subframe structure illustrated in FIG. 3 is also an example. For example, the number of subframes included in one frame is not limited to 16. In an embodiment, the signal generator 21 may generate a frame including any number (e.g. a plurality) of subframes.

Referring back to FIG. 2, the synthesizer 22 increases the frequency of the signal generated by the signal generator 21 to a frequency in a predetermined frequency band. The synthesizer 22 may increase the frequency of the signal generated by the signal generator 21 to a frequency selected as the frequency of the transmission waves T transmitted from the transmission antenna 25. The frequency selected as the frequency of the transmission waves T transmitted from the transmission antenna 25 may be, for example, set by the controller 10. For example, the frequency selected as the frequency of the transmission waves T transmitted from the transmission antenna 25 may be a frequency selected by the parameter setting unit 16. The frequency selected as the frequency of the transmission waves T transmitted from the transmission antenna 25 may be, for example, stored in the memory 40. The signal increased in frequency by the synthesizer 22 is supplied to the phase controller 23 and the mixer 33. In the case where there are a plurality of phase controllers 23, the signal increased in frequency by the synthesizer 22 may be supplied to each of the plurality of phase controllers 23. In the case where there are a plurality of receivers 30, the signal increased in frequency by the synthesizer 22 may be supplied to the mixer 33 in each of the plurality of receivers 30.

The phase controller 23 controls the phase of the transmission signal supplied from the synthesizer 22. Specifically, the phase controller 23 may, for example, adjust the phase of the transmission signal by advancing or delaying the phase of the signal supplied from the synthesizer 22 as appropriate, based on control by the controller 10. In this case, based on the path difference between the transmission waves T transmitted from the plurality of transmission antennas 25, the phase controllers 23 may adjust the phases of the respective transmission signals. As a result of the phase controllers 23 adjusting the phases of the respective transmission signals as appropriate, the transmission waves T transmitted from the plurality of transmission antennas 25 intensify each other and form a beam in a predetermined direction (i.e. beamforming). In this case, the correlation between the beamforming direction and the amount of phase to be controlled in the transmission signal transmitted from each of the plurality of transmission antennas 25 may be stored in, for example, the memory 40. The transmission signal phase-controlled by the phase controller 23 is supplied to the amplifier 24.

The amplifier 24 amplifies the power of the transmission signal supplied from the phase controller 23, for example based on control by the controller 10. In the case where the sensor 5 includes a plurality of transmission antennas 25, a plurality of amplifiers 24 may each amplify the power of the transmission signal supplied from a corresponding one of the plurality of phase controllers 23, for example based on control by the controller 10. The technique of amplifying the power of the transmission signal is known, and therefore its more detailed description is omitted. The amplifier 24 is connected to the transmission antenna 25.

The transmission antenna 25 outputs (transmits) the transmission signal amplified by the amplifier 24, as the transmission waves T. In the case where the sensor 5 includes a plurality of transmission antennas 25, each of the plurality of transmission antennas 25 may output (transmit) the transmission signal amplified by a corresponding one of the plurality of amplifiers 24, as the transmission waves T. Since the transmission antenna 25 can be configured in the same way as transmission antennas used in known radar techniques, more detailed description is omitted.

Thus, the electronic device 1 according to the embodiment includes the transmission antenna 25, and can transmit the transmission signal (e.g. transmission chirp signal) from the transmission antenna 25 as the transmission waves T. At least one of the functional parts included in the electronic device 1 may be contained in one housing. The housing may have a structure that cannot be opened easily. For example, the transmission antenna 25, the reception antenna 31, and the amplifier 24 may be contained in one housing having a structure that cannot be opened easily. In the case where the sensor 5 is installed in the mobile body 100 such as a car, the transmission antenna 25 may transmit the transmission waves T to outside the mobile body 100 through a cover member such as a radar cover. In this case, the radar cover may be made of a material that allows electromagnetic waves to pass through, such as synthetic resin or rubber. For example, the radar cover may be a housing of the sensor 5. By covering the transmission antenna 25 with a member such as a radar cover, the risk that the transmission antenna 25 breaks or becomes defective due to external contact can be reduced. The radar cover and the housing are also referred to as "radome".

In the example illustrated in FIG. 2, the electronic device 1 includes two transmission antennas 25. In an embodiment, however, the electronic device 1 may include any number of transmission antennas 25. In an embodiment, the electronic device 1 may include a plurality of transmission antennas 25 in the case of forming, in a predetermined direction, a beam of the transmission waves T transmitted from the transmission antennas 25. In an embodiment, the electronic device 1 may include any number of transmission antennas 25, where the number is 2 or more. In this case, the electronic device 1 may include a plurality of phase controllers 23 and a plurality of amplifiers 24 corresponding to the plurality of transmission antennas 25. The plurality of phase controllers 23 may control the phases of the plurality of transmission waves supplied from the synthesizer 22 and transmitted from the respective plurality of transmission antennas 25. The plurality of amplifiers 24 may amplify the powers of the plurality of transmission signals transmitted from the respective plurality of transmission antennas 25. In this case, the sensor 5 may include the plurality of transmission antennas. Thus, in the case where the electronic device 1 illustrated in FIG. 2 includes the plurality of transmission antennas 25, the electronic device 1 may equally include the pluralities of functional parts necessary for transmitting the transmission waves T from the plurality of transmission antennas 25.

The reception antenna 31 receives reflected waves R. The reflected waves R result from reflection of the transmission waves T off the object 200. The reception antenna 31 may include a plurality of antennas such as the reception antennas 31A to 31D. Since the reception antenna 31 can be configured in the same way as reception antennas used in known radar techniques, more detailed description is omitted. The reception antenna 31 is connected to the LNA 32. A reception signal based on the reflected waves R received by the reception antenna 31 is supplied to the LNA 32.

The electronic device 1 according to the embodiment can receive the reflected waves R as a result of the transmission waves T transmitted as the transmission signal such as a chirp signal (transmission chirp signal) being reflected off the object 200, by the plurality of reception antennas 31. In the case where the transmission chirp signal is transmitted as the transmission waves T, the reception signal based on the received reflected waves R is referred to as "reception chirp signal". That is, the electronic device 1 receives the reception signal (e.g. reception chirp signal) by the reception antenna 31 as the reflected waves R. In the case where the sensor 5 is installed in the mobile body 100 such as a car, the reception antenna 31 may receive the reflected waves R from outside the mobile body 100 through a cover member such as a radar cover. In this case, the radar cover may be made of a material that allows electromagnetic waves to pass through, such as synthetic resin or rubber. For example, the radar cover may be a housing of the sensor 5. By covering the reception antenna 31 with a member such as a radar cover, the risk that the reception antenna 31 breaks or becomes defective due to external contact can be reduced. The radar cover and the housing are also referred to as "radome".

In the case where the reception antenna 31 is installed near the transmission antenna 25, these antennas may be included in one sensor 5 in combination. For example, one sensor 5 may include at least one transmission antenna 25 and at least one reception antenna 31. For example, one sensor 5 may include a plurality of transmission antennas 25 and a plurality of reception antennas 31. In such a case, for example, one radar sensor may be covered with one cover member such as a radar cover.

The LNA 32 amplifies the reception signal based on the reflected waves R received by the reception antenna 31, with low noise. The LNA 32 may be a low-noise amplifier, and amplifies the reception signal supplied from the reception antenna 31 with low noise. The reception signal amplified by the LNA 32 is supplied to the mixer 33.

The mixer 33 mixes (multiplies) the reception signal of RF frequency supplied from the LNA 32 and the transmission signal supplied from the synthesizer 22, to generate a beat signal. The beat signal generated by the mixer 33 is supplied to the IF unit 34.

The IF unit 34 performs frequency conversion on the beat signal supplied from the mixer 33, to lower the frequency of the beat signal to intermediate frequency (IF). The beat signal lowered in frequency by the IF unit 34 is supplied to the AD converter 35.

The AD converter 35 digitizes the analog beat signal supplied from the IF unit 34. The AD converter 35 may include any analog-to-digital converter (ADC). The beat signal digitized by the AD converter 35 is supplied to the distance FFT processor 11 in the controller 10. In the case where there are the plurality of receivers 30, the respective beat signals digitized by the plurality of AD converters 35 may be supplied to the distance FFT processor 11.

The distance FFT processor 11 estimates the distance between the mobile body 100 having the electronic device 1 mounted therein and the object 200, based on the beat signal supplied from the AD converter 35. The distance FFT processor 11 may include, for example, a processor that performs a fast Fourier transform (FFT). In this case, the distance FFT processor 11 may be composed of any circuit, chip, or the like for performing FFT processing.

The distance FFT processor 11 performs FFT processing (hereafter also referred to as "distance FFT processing") on the beat signal digitized by the AD converter 35. For example, the distance FFT processor 11 may perform FFT processing on the complex signal supplied from the AD converter 35. The beat signal digitized by the AD converter 35 can be expressed as the temporal change of the signal intensity (power). As a result of the distance FFT processor 11 performing FFT processing on such a beat signal, the signal intensity (power) corresponding to each frequency can be expressed. In the case where the peak of the result obtained by the distance FFT processing is greater than or equal to a predetermined threshold, the distance FFT processor 11 may determine that the object 200 is present at a distance corresponding to the peak. For example, there is a known method that, upon detecting a peak value greater than or equal to a threshold from an average power or amplitude of a disturbance signal, determines that there is an object (reflecting object) reflecting transmission waves, as in constant false alarm rate (CFAR) detection.

Thus, the electronic device 1 according to the embodiment can detect the object 200 reflecting the transmission waves T, based on the transmission signal transmitted as the transmission waves T and the reception signal received as the reflected waves R.

The distance FFT processor 11 can estimate the distance from the object based on one chirp signal (e.g. c1 in FIG. 3). That is, the electronic device 1 can measure (estimate) the distance L illustrated in FIG. 1, by performing distance FFT processing. Since the technique of measuring (estimating) the distance from a certain object by performing FFT processing on a beat signal is well known, more detailed description is simplified or omitted as appropriate. The result (e.g. distance information) of performing distance FFT processing by the distance FFT processor 11 may be supplied to the speed FFT processor 12. The result of performing distance FFT processing by the distance FFT processor 11 may be also supplied to the object detector 14.

The speed FFT processor 12 estimates the relative speed of the mobile body 100 having the electronic device 1 mounted therein and the object 200, based on the beat signal subjected to distance FFT processing by the distance FFT processor 11. The speed FFT processor 12 may include, for example, a processor that performs a fast Fourier transform (FFT). In this case, the speed FFT processor 12 may be composed of any circuit, chip, or the like for performing FFT processing.

The speed FFT processor 12 performs FFT processing (hereafter also referred to as "speed FFT processing") on the beat signal subjected to distance FFT processing by the distance FFT processor 11. For example, the speed FFT processor 12 may perform FFT processing on the complex signal supplied from the distance FFT processor 11. The speed FFT processor 12 can estimate the relative speed with respect to the object, based on a subframe of chirp signals (e.g. subframe 1 in FIG. 3). As a result of performing distance FFT processing on the beat signal as mentioned above, a plurality of vectors can be generated. By finding the phase of a peak in the result of subjecting the plurality of vectors to speed FFT processing, the relative speed with respect to the object can be estimated. That is, the electronic device 1 can measure (estimate) the relative speed of the mobile body 100 and the object 200 illustrated in FIG. 1, by performing speed FFT processing. Since the technique of measuring (estimating) the relative speed with respect to a certain object by performing speed FFT processing on a result of distance FFT processing is well known, more detailed description is simplified or omitted as appropriate. The result (e.g. speed information) of performing speed FFT processing by the speed FFT processor 12 may be supplied to the arrival angle estimation unit 13. The result of performing speed FFT processing by the speed FFT processor 12 may be also supplied to the object detector 14.

The arrival angle estimation unit 13 estimates the direction in which the reflected waves R reach from the object 200, based on the result of speed FFT processing by the speed FFT processor 12. The electronic device 1 can estimate the direction in which the reflected waves R reach, by receiving the reflected waves R from the plurality of reception antennas 31. For example, suppose the plurality of reception antennas 31 are arranged at predetermined intervals. The transmission waves T transmitted from the transmission antenna 25 are reflected off the object 200 to become the reflected waves R, which are received by each of the plurality of reception antennas 31 arranged at the predetermined intervals. Based on the phase of the reflected waves R received by each of the plurality of reception antennas 31 and the path difference between the reflected waves R of the plurality of reception antennas 31, the arrival angle estimation unit 13 can estimate the direction in which the reflected waves R reach the reception antennas 31. That is, the electronic device 1 can measure (estimate) the arrival angle θ illustrated in FIG. 1, based on the result of speed FFT processing.

There are various proposed techniques of estimating the direction in which the reflected waves R reach based on the result of speed FFT processing Examples of known arrival direction estimation algorithms include multiple signal classification (MUSIC) and estimation of signal parameters via rotational invariance technique (ESPRIT). Detailed description of such known techniques is simplified or omitted as appropriate. Information (angle information) of the arrival angle θ estimated by the arrival angle estimation unit 13 may be supplied to the object detector 14.

The object detector 14 detects an object present in the range in which the transmission waves T are transmitted, based on the information supplied from at least one of the distance FFT processor 11, the speed FFT processor 12, and the arrival angle estimation unit 13. For example, the object detector 14 may detect the object by performing clustering processing based on the supplied distance information, speed information, and angle information. As an algorithm used when clustering data, for example, density-based spatial clustering of applications with noise (DBSCAN) is known. In clustering processing, for example, the average power of points constituting the detected object may be calculated. The distance information, speed information, angle information, and power information of the object detected by the object detector 14 may be supplied to the detection range determination unit 15. The distance information, speed information, angle information, and power information of the object detected by the object detector 14 may be supplied to the ECU 50. In the case where the mobile body 100 is a car, the communication may be performed using a communication interface such as CAN (Controller Area Network).

The detection range determination unit 15 determines the range (hereafter also referred to as "object detection range") of detecting an object reflecting the transmission waves T based on the transmission signal and the reception signal. The detection range determination unit 15 may determine the object detection range based on, for example, an operation by the driver of the mobile body 100 in which the electronic device 1 is mounted. For example, in the case where the driver of the mobile body 100 or the like operates a parking assistance button, the detection range determination unit 15 may determine the object detection range appropriate for parking assistance. The detection range determination unit 15 may determine the object detection range based on, for example, an instruction from the ECU 50. For example, in the case where the ECU 50 determines that the mobile body 100 is about to be reversed, the detection range determination unit 15 may determine, based on an instruction from the ECU 50, the object detection range appropriate when reversing the mobile body 100. The detection range determination unit 15 may determine the object detection range based on, for example, a change in the operating state of the steering, the accelerator, the gear, etc. in the mobile body 100. Moreover, the detection range determination unit 15 may determine the object detection range based on the result of object detection by the object detector 14.

The parameter setting unit 16 sets various parameters defining the transmission signal and the reception signal for detecting the object reflecting the transmission waves T as the reflected waves R. In detail, the parameter setting unit 16 sets various parameters for transmitting the transmission waves T by the transmission antenna 25 and various parameters for receiving the reflected waves R by the reception antenna 31.

In particular, in an embodiment, the parameter setting unit 16 may set various parameters relating to the transmission of the transmission waves T and the reception of the reflected waves R, in order to perform object detection in the foregoing object detection range. For example, the parameter setting unit 16 may define the range of receiving the reflected waves R, in order to receive the reflected waves R and detect an object in the object detection range. For example, the parameter setting unit 16 may define the range of aiming the beam of the transmission waves T, in order to transmit the transmission waves T from the plurality of transmission antennas 25 and detect an object in the object detection range. The parameter setting unit 16 may set various parameters for performing the transmission of the transmission waves T and the reception of the reflected waves R.

The parameters set by the parameter setting unit 16 may be supplied to the signal generator 21. Thus, the signal generator 21 can generate the transmission signal transmitted as the transmission waves T based on the parameters set by the parameter setting unit 16. The parameters set by the parameter setting unit 16 may be supplied to the object detector 14. Thus, the object detector 14 can perform the process of object detection in the object detection range determined based on the parameters set by the parameter setting unit 16.

The ECU 50 included in the electronic device 1 according to the embodiment controls overall operation of the mobile body 100, including control of each of the functional parts included in the mobile body 100. In the electronic device 1 according to the embodiment, the ECU 50 controls a plurality of sensors 5 as described later. Hereafter, in an embodiment, the ECU 50 is also referred to as "main controller". The ECU 50 may include at least one processor such as a central processing unit (CPU), to provide control and processing capacity for achieving various functions. The ECU 50 may be implemented by one processor, by several processors, or by respective separate processors. Each processor may be implemented as a single integrated circuit (IC). Each processor may be implemented as a plurality of integrated circuits and/or discrete circuits communicably connected to one another. Each processor may be implemented based on any of other various known techniques. In an embodiment, the ECU 50 may be implemented, for example, by a CPU and a program executed by the CPU. The ECU 50 may include a memory necessary for the operation of the ECU 50. The ECU 50 may have at least part of the functions of the controller 10, and the controller 10 may have at least part of the functions of the ECU 50.

Although the electronic device 1 illustrated in FIG. 2 includes two transmission antennas 25 and four reception antennas 31, the electronic device 1 according to the embodiment may include any number of transmission antennas 25 and any number of reception antennas 31. For example, the inclusion of two transmission antennas 25 and four reception antennas 31 enables the electronic device 1 to have a virtual antenna array composed of eight antennas virtually. For example, the electronic device 1 may receive the reflected waves R of 16 subframes illustrated in FIG. 3, by using the virtual eight antennas.

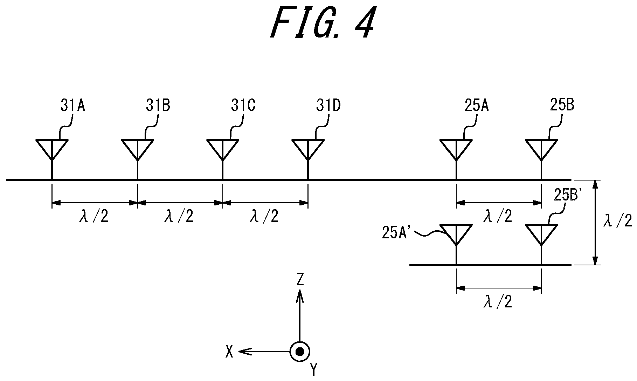

FIG. 4 is a diagram illustrating an example of arrangement of transmission antennas and reception antennas in a sensor in the electronic device according to the embodiment. The directions of X-axis, Y-axis, and Z-axis in FIG. 4 may be the same as the directions of X-axis, Y-axis, and Z-axis in FIG. 1.

For example, the sensor 5 in the electronic device 1 according to the embodiment may include two transmission antennas 25A and 25A', as illustrated in FIG. 4. The sensor 5 in the electronic device 1 according to the embodiment may also include four reception antennas 31A, 31B, 31C, and 31D, as illustrated in FIG. 4.

The four reception antennas 31A, 31B, 31C, and 31D are arranged at an interval λ/2 in the horizontal direction (X-axis direction), where λ is the wavelength of the transmission waves T. By aligning the plurality of reception antennas 31 in the horizontal direction and receiving the transmission waves T by the plurality of reception antennas 31, the electronic device 1 can estimate the direction in which the reflected waves R reach. For example, in the case where the frequency band of the transmission waves T is 77 GHz to 81 GHz, the wavelength λ of the transmission waves T may be the wavelength of the transmission waves T at the center frequency 79 GHz.

The two transmission antennas 25A and 25A' are arranged at an interval λ/2 in the vertical direction (Z-axis direction), where λ is the wavelength of the transmission waves T. By aligning the plurality of transmission antennas 25 in the vertical direction and transmitting the transmission waves T by the plurality of transmission antennas 25, the electronic device 1 can change the direction of the beam of the transmission waves T to the vertical direction.

The sensor 5 in the electronic device 1 according to the embodiment may include, for example, four transmission antennas 25A, 25A', 25B, and 25B', as illustrated in FIG. 4.

The two transmission antennas 25A and 25B are arranged at an interval λ/2 in the horizontal direction (X-axis direction) where λ is the wavelength of the transmission waves T, as illustrated in FIG. 4. The two transmission antennas 25A' and 25B' are arranged at an interval λ/2 in the horizontal direction (X-axis direction) where λ is the wavelength of the transmission waves T, as illustrated in FIG. 4. Thus, by aligning a plurality of transmission antennas 25 in the horizontal direction and transmitting the transmission waves T from the plurality of transmission antennas 25, the electronic device 1 can change the direction of the beam of the transmission waves T to the horizontal direction.

The two transmission antennas 25B and 25B' are arranged at an interval λ/2 in the vertical direction (Z-axis direction) where λ is the wavelength of the transmission waves T, as illustrated in FIG. 4. Thus, by aligning a plurality of transmission antennas 25 in the vertical direction and transmitting the transmission waves T from the plurality of transmission antennas 25 in the arrangement illustrated in FIG. 4, the electronic device 1 can change the direction of the beam of the transmission waves T to the vertical direction.

In the electronic device 1 according to the embodiment, in the case of beamforming the transmission waves T transmitted from the plurality of transmission antennas 25, the transmission waves T of the plurality of transmission antennas 25 may be in phase with each other in a predetermined direction based on the path difference when transmitting the transmission waves T of the plurality of transmission antennas 25. In the electronic device 1 according to the embodiment, for example, the phase controller 23 may control the phase of the transmission waves transmitted from at least one of the plurality of transmission antennas 25 so that the transmission waves T of the plurality of transmission antennas 25 will be in phase with each other in the predetermined direction.

The amount of phase controlled so that the plurality of transmission waves T will be in phase with each other in the predetermined direction may be stored in the memory 40 in association with the predetermined direction. That is, the relationship between the beam direction and the phase amount when performing beamforming may be stored in the memory 40.

The relationship may be determined, for example, based on actual measurement in a test environment, before object detection by the electronic device 1. In the case where the relationship is not stored in the memory 40, the phase controller 23 may estimate the relationship as appropriate based on predetermined data such as past measurement data. In the case where the relationship is not stored in the memory 40, the phase controller 23 may acquire an appropriate relationship through, for example, network connection to the outside.

In the electronic device 1 according to the embodiment, at least one of the controller 10 and the phase controller 23 may perform control to beamform the transmission waves T transmitted from the plurality of transmission antennas 25. In the electronic device 1 according to the embodiment, a functional part including at least the phase controller 23 is also referred to as "transmission controller".

Thus, in the electronic device 1 according to the embodiment, the transmission antenna 25 may include a plurality of transmission antennas. Moreover, in the electronic device 1 according to the embodiment, the reception antenna 31 may include a plurality of reception antennas. In the electronic device 1 according to the embodiment, the transmission controller (e.g. the phase controller 23) may perform control to form (beamforming) a beam of the transmission waves T transmitted from the plurality of transmission antennas 25 in the predetermined direction. In the electronic device 1 according to the embodiment, the transmission controller (e.g. the phase controller 23) may form the beam in the direction of the object detection range.

In the electronic device 1 according to the embodiment, the transmission antenna 25 may include a plurality of transmission antennas 25 arranged to include a vertical component, as mentioned above. In this case, in the electronic device 1 according to the embodiment, the phase controller 23 (transmission controller) may change the direction of the beam to the direction of the object detection range, including the vertical component.

Moreover, in the electronic device 1 according to the embodiment, the transmission antenna 25 may include a plurality of transmission antennas 25 arranged to include a horizontal component, as mentioned above. In this case, in the electronic device 1 according to the embodiment, the phase controller 23 (transmission controller) may change the direction of the beam to the direction of the object detection range, including the horizontal component.

In the electronic device 1 according to the embodiment, the transmission controller (e.g. the phase controller 23) may form the beam in a direction that covers at least part of the object detection range. In the electronic device 1 according to the embodiment, the transmission controller (e.g. the phase controller 23) may control the phase of the transmission waves transmitted from at least one of the plurality of transmission antennas 25 so that the transmission waves T of the plurality of transmission antennas 25 will be in phase with each other in the predetermined direction.

The electronic device 1 according to the embodiment can calculate a phase compensation value based on frequency information of a wide frequency band signal (e.g. FMCW signal) output from the plurality of transmitting antennas 25, and perform frequency-dependent phase compensation on each of the plurality of transmitting antennas. In this way, beamforming can be performed with high accuracy in a specific direction in all possible frequency bands of the transmission signal.

With such beamforming, the distance within which object detection is possible can be expanded in a specific direction in which object detection is required. Moreover, with such beamforming, a reflection signal from any unnecessary direction can be reduced. This improves the distance/angle detection accuracy.

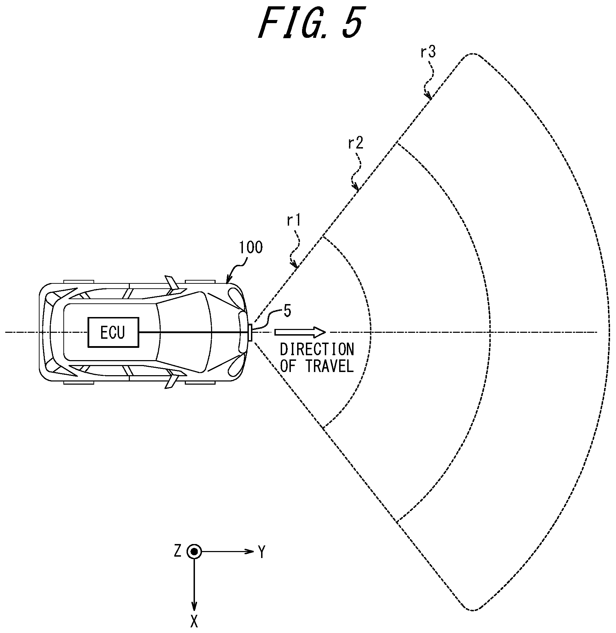

FIG. 5 is a diagram illustrating types of radar detection distances realized by the electronic device 1 according to the embodiment.

The electronic device 1 according to the embodiment is capable of performing object detection range cutout and/or transmission wave beamforming, as mentioned above. With use of at least one of object detection range cutout and transmission wave beamforming, the range of distance in which an object is detectable by the transmission signal and the reception signal can be defined.

For example, the electronic device 1 according to the embodiment can perform object detection in a range r1, as illustrated in FIG. 5. The range r1 illustrated in FIG. 5 may be, for example, a range in which object detection can be performed by ultra short range radar (USRR). For example, the electronic device 1 according to the embodiment can perform object detection in a range r2, as illustrated in FIG. 5. The range r2 illustrated in FIG. 5 may be, for example, a range in which object detection can be performed by short range radar (SRR). For example, the electronic device 1 according to the embodiment can perform object detection in a range r3, as illustrated in FIG. 5. The range r3 illustrated in FIG. 5 may be, for example, a range in which object detection can be performed by mid-range radar (MRR). As described above, the electronic device 1 according to the embodiment can perform object detection while switching, for example, the range among the ranges r1, r2, and r3 as appropriate. With such radar systems that differ in detection distance, the distance measurement accuracy tends to be lower when the detection distance is longer.

Thus, the electronic device 1 according to the embodiment may set the range of distance in which an object is detected by the transmission signal and the reception signal, depending on the object detection range.

The state of connection between the sensor 5 and the main controller (ECU) 50 in the electronic device 1 will be described below.

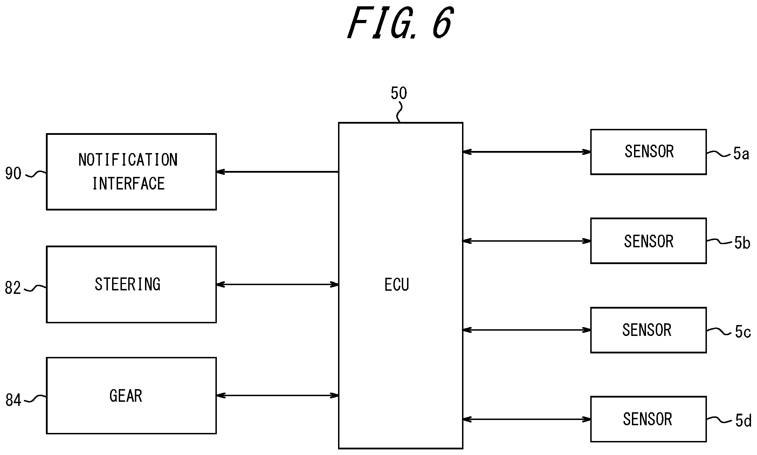

FIG. 6 is a diagram illustrating an example of the state of connection between the sensor 5 and the main controller (ECU) 50 in the electronic device according to the embodiment.

FIG. 6 is a diagram schematically illustrating the state of connection between the mobile body 100 and the sensor 5 illustrated in FIG. 1, as an example. The electronic device 1 according to the embodiment may include a plurality of sensors 5. For example, the plurality of sensors 5 may include four sensors such as sensors 5a, 5b, 5c, and 5d, as illustrated in FIG. 6. Hereafter, in the case where the plurality of sensors such as the sensors 5a, 5b, 5c, and 5d are not distinguished from each other in the electronic device 1 according to the embodiment, they are simply referred to as "sensor 5". FIG. 2 illustrates an example in which only one sensor 5 is connected to the ECU 50. FIG. 6 illustrates an example in which four sensors 5 are connected to the ECU 50. This will be described below.

In an embodiment, the plurality of sensors 5 are each connected to the ECU 50, as illustrated in FIG. 6. The ECU 50 may be connected to, for example, a steering 82 and/or a gear 84 used when operating the mobile body 100. The ECU 50 may be connected to any other functional part used when operating the mobile body 100, such as a brake. The ECU 50 may be connected to any functional part used when operating the mobile body 100, and may be connected to any functional part controlled in the mobile body 100. The ECU 50 may also be connected to a notification interface 90. In an embodiment, these functional parts can communicate various information through their connection.

The plurality of sensors 5 illustrated in FIG. 6 may each have the same structure as the sensor 5 illustrated in FIG. 2. The plurality of sensors 5 illustrated in FIG. 6 may each be independently controlled by the ECU 50 as a result of being connected to the ECU 50.

The ECU 50 can perform various types of detection such as the detection of an object around the mobile body 100, based on information output from the plurality of sensors 5. When performing various types of detection, the ECU 50 can control each of the plurality of sensors 5. The functions and operations of the plurality of sensors 5 controlled by the ECU 50 will be described in detail later.

For example in the case where the mobile body 100 is a car, the ECU (electronic control unit) 50 can acquire the states of various functional parts, such as the steering 82 and the gear 84, in the mobile body 100. The ECU 50 is also referred to as "main controller" as appropriate, as mentioned earlier.

The steering 82 controls the steering angle of each wheel including a tire and the like for causing the mobile body 100 to run. The mobile body 100 can change the direction during running, by controlling the steering 82. The steering 82 in the mobile body 100 may be, for example, the same as a steering used to steer a typical car. In an embodiment, the steering 82 in the mobile body 100 may be operated by the driver, or operated by the ECU 50 in automatic driving.

The gear 84 may be a transmission, such as a gearbox, capable of changing the reduction ratio of the power of the mobile body 100. The mobile body 100 can change the forward movement or backward movement during running, by operation of the gear 84. The mobile body 100 can also change the running speed, by operation of the gear 84. The gear 84 in the mobile body 100 may be, for example, the same as a transmission used to shift gears in a typical car. In an embodiment, the gear 84 in the mobile body 100 may be operated by the driver, or operated by the ECU 50 in automatic driving.

Not only the steering 82 and the gear 84 but also functional parts such as a throttle and/or a brake may be connected to the ECU 50. The throttle and/or the brake in the mobile body 100 may be the same as those used for shifting gears in typical cars. In an embodiment, the throttle and/or the brake in the mobile body 100 may be operated by the driver, or operated by the ECU 50 in automatic driving.

The notification interface 90 notifies the driver of the mobile body 100 or the like of predetermined information. The notification interface 90 may be any functional part that stimulates at least one of the hearing, vision, and touch of the driver of the mobile body 100, such as sound, voice, light, text, video, and vibration. Specifically, the notification interface 90 may be, for example, a buzzer, a speaker, a light emitting part such as an LED, a display such as an LCD, or a tactile sensation providing part such as a vibrator. In an embodiment, the notification interface 90 notifies the driver of the mobile body 100 or the like of information about the result of detecting an object around the mobile body 100. For example, in an embodiment, when an object around the mobile body 100 is detected, the notification interface 90 that provides visual information may notify the driver of the mobile body that the object is detected, by light emission, display, or the like. In an embodiment, when an object around the mobile body 100 is detected, the notification interface 90 that provides auditory information may notify the driver of the mobile body that the object is detected, by sound or voice.

In the case where the mobile body 100 is driven by the driver, the ECU 50 can detect the states of various functional parts in the mobile body 100. For example, the ECU 50 can detect the steering angle at which the steering 82 of the mobile body 100 is operated. For example, the ECU 50 can detect whether the gear 84 of the mobile body 100 is operated for forward movement or backward movement, the speed at which the transmission is operated, etc. For example, the ECU 50 may detect the on/off state of the throttle and the brake and the level of the throttle and the brake in the mobile body 100.

In the case where the mobile body 100 is driven by the driver, the notification interface 90 may notify the driver of information of the result of detecting an object around the mobile body 100. In this case, the controller 10 may control the notification interface 90 to notify the driver of the information of the result of detecting an object around the mobile body 100.

In the case where the mobile body 100 is driven by automatic driving, the ECU 50 can control various functional parts in the mobile body 100. Herein, "automatic driving" may denote automatic driving of levels 1 to 5 defined by the Japanese government and the National Highway Traffic Safety Administration (NHTSA). For example, the ECU 50 may automatically control the steering 82 of the mobile body 100 depending on the detection result of each sensor 5. The ECU 50 may automatically control the gear 84 of the mobile body 100 (for example, control the gear 84 to move forward or backward) depending on the detection result of each sensor 5. The ECU 50 may automatically control the speed at which the gear 84 is operated, depending on the detection result of each sensor 5. The ECU 50 may, for example, automatically control the on/off state of the throttle and the brake and the level of the throttle and the brake in the mobile body 100, depending on the detection result of each sensor 5.

Thus, the electronic device 1 may include the ECU 50 that controls the operation of the mobile body 100. In this case, the plurality of sensors 5 may supply information of the result of detecting an object around the mobile body 100, to the ECU 50. The ECU 50 may then control the operation of the mobile body 100 based on the information supplied from at least one of the plurality of sensors 5.

Operations of the electronic device 1 according to the embodiment will be described below.

In the electronic device according to the embodiment, the main controller 50 controls the plurality of sensors 5 independently of each other. Herein, controlling each of the plurality of sensors 5 may involve, for example, changing the object detection range of the sensor 5 and/or changing the transmission wave reaching distance of the sensor 5. Moreover, controlling each of the plurality of sensors 5 may involve control of object detection range cutout by the sensor 5 and/or transmission wave beamforming by the sensor 5. The independent control of each of the plurality of sensors 5 will be described in detail below.

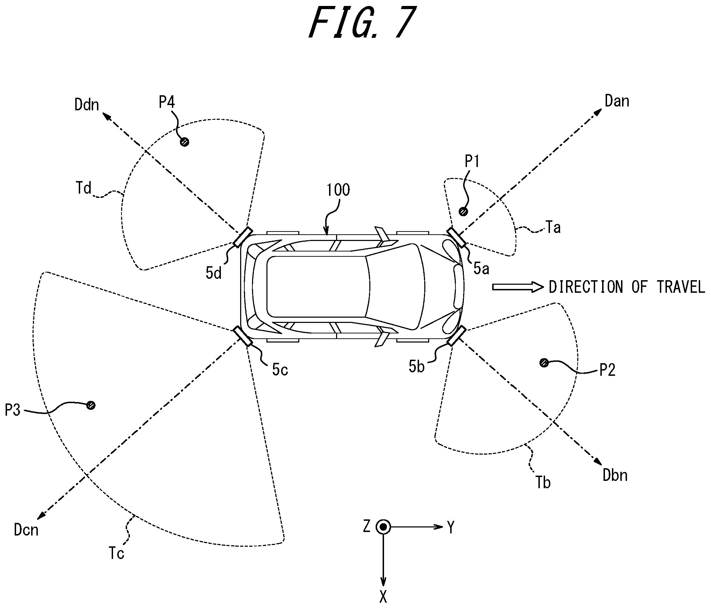

FIG. 7 is a diagram illustrating an example of operation of the electronic device 1 according to the embodiment. In the case where the electronic device 1 according to the embodiment includes a plurality of sensors 5, the sensors 5 may be installed in a plurality of parts of the mobile body 100, as illustrated in FIG. 7.

In the example illustrated in FIG. 7, the sensor 5a is located in a front left part of the mobile body 100, the sensor 5b is located in a front right part of the mobile body 100, the sensor 5c is located in a back right part of the mobile body 100, and the sensor 5d is located in a back left part of the mobile body 100. In the example illustrated in FIG. 7, the sensor 5a transmits transmission waves Ta, the sensor 5b transmits transmission waves Tb, the sensor 5c transmits transmission waves Tc, and the sensor 5d transmits transmission waves Td.

In the electronic device according to the embodiment, the main controller 50 can control the plurality of sensors 5 independently of each other. Accordingly, the main controller 50 can independently control the range of distance in which an object is detected by each of the plurality of sensors 5, for example as illustrated in FIG. 7. For example, the main controller 50 may set the object detection range of the sensor 5a to the range r1 illustrated in FIG. 5, i.e. the range in which object detection can be performed by ultra short range radar (USRR). For example, the main controller 50 may set the object detection range of each of the sensors 5b and 5d to the range r2 illustrated in FIG. 5, i.e. the range in which object detection can be performed by short range radar (SRR). For example, the main controller 50 may set the object detection range of the sensor 5c to the range r3 illustrated in FIG. 5, i.e. the range in which object detection can be performed by mid-range radar (MRR).

In the detection form illustrated in FIG. 7, for example, the main controller 50 may start independent control of each of the plurality of sensors 5, triggered by each of the plurality of sensors 5 detecting an object. As illustrated in FIG. 7, the following event may trigger the start of independent control of each of the plurality of sensors 5 by the main controller 50: The sensor 5a detects an object P1, the sensor 5b detects an object P2, the sensor 5c detects an object P3, and the sensor 5d detects an object P4.

The main controller 50 may initially be in a state in which none of the plurality of sensors 5 has started object detection. In this case, as a result of the plurality of sensors 5 each detecting an object, the main controller 50 may start the detection as illustrated in FIG. 7. The main controller 50 may be in a state in which all of the plurality of sensors 5 have already started object detection. In this case, as a result of the plurality of sensors 5 each detecting an object, the main controller 50 may optimize the object detection range and the like depending on the detected object, as illustrated in FIG. 7.

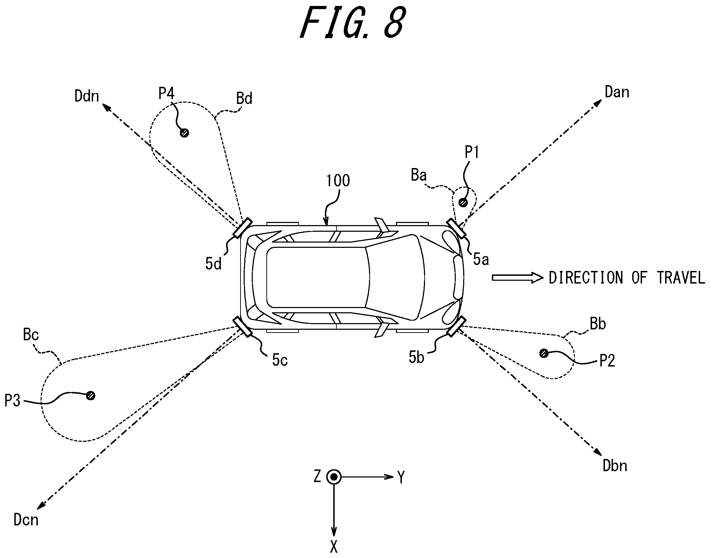

FIG. 8 is a diagram illustrating another example of operation of the electronic device 1 according to the embodiment. The description of the parts same as or similar to those described with reference to FIG. 7 will be simplified or omitted in FIG. 8.

In the example illustrated in FIG. 8, the state in which a plurality of sensors are installed in the mobile body 100 is the same as that in FIG. 7. In the electronic device according to the embodiment, the main controller 50 can control the plurality of sensors 5 independently of each other, as mentioned above. Accordingly, the main controller 50 can independently control the beamforming by the plurality of sensors 5, for example as illustrated in FIG. 8. For example, in the example illustrated in FIG. 8, the main controller 50 performs control to form (beamforming) a beam Ba of transmission waves transmitted from the sensor 5a. Likewise, the main controller 50 performs control to form a beam Bb of transmission waves transmitted from the sensor 5b, form a beam Bc of transmission waves transmitted from the sensor 5c, and form a beam Bd of transmission waves transmitted from the sensor 5d.

In the detection form illustrated in FIG. 8, too, for example, the main controller 50 may start independent control of each of the plurality of sensors 5, triggered by each of the plurality of sensors 5 detecting an object. As illustrated in FIG. 8, the following event may trigger the start of independent control of each of the plurality of sensors 5 by the main controller 50: The sensors 5 detect the respective objects, as described with reference to FIG. 7.

The main controller 50 may initially be in a state in which none of the plurality of sensors 5 has started beamforming. In this case, as a result of the plurality of sensors 5 each detecting an object, the main controller 50 may form the beams as illustrated in FIG. 8. The main controller 50 may be in a state in which all of the plurality of sensors 5 are already performing beamforming in a predetermined direction. In this case, as a result of the plurality of sensors 5 each detecting an object, the main controller 50 may change the direction of the beam depending on the detected object, as illustrated in FIG. 8.

Moreover, for example, the main controller 50 may initially create a state in which the beam by each of the plurality of sensors 5 is aimed in a reference direction. The reference direction of the beam may be a direction in which, in a state in which the phase is not controlled in each sensor 5, the plurality of transmission waves are in phase with each other. For example, the reference direction of the beam in the sensor 5a may be a direction Dan illustrated in FIG. 8. Likewise, the reference direction of the beam in the sensor 5b may be a direction Dbn, the reference direction of the beam in the sensor 5c may be a direction Dcn, and the reference direction of the beam in the sensor 5d may be a direction Ddn. In this case, too, as a result of the plurality of sensors 5 each detecting an object, the main controller 50 may change the direction of the beam depending on the detected object, as illustrated in FIG. 8.

Thus, the main controller 50 in the electronic device 1 according to the embodiment may perform control so that the operation of at least one sensor (e.g. the sensor 5a) from among the plurality of sensors 5 is different from the operation of the sensors (e.g. the sensors 5b, 5c, and 5d) other than the at least one sensor from among the plurality of sensors 5.

The main controller 50 in the electronic device 1 according to the embodiment may control each of the plurality of sensors 5 to perform a predetermined operation, based on the occurrence of a predetermined event. For example, the main controller 50 in the electronic device 1 according to the embodiment may control each of the plurality of sensors 5 to perform a predetermined operation, based on the detection of an object reflecting the transmission waves T.

The operation illustrated in each of FIGS. 7 and 8 may be performed, for example, based on the behavior of the mobile body 100. That is, the main controller 50 may independently control each of the plurality of sensors 5 based on the behavior of the mobile body 100.

For example, in the case where the mobile body 100 changes course to the right in the situation illustrated in FIG. 7, the object detection range of each of the sensors 5b and 5c installed at the right of the mobile body 100 may be changed to be wider. In the case where the mobile body 100 changes course to the right, the object detection distance of each of the sensors 5b and 5c installed at the right of the mobile body 100 may be changed to be longer.

For example, in the case where the mobile body 100 changes course to the right in the situation illustrated in FIG. 8, the direction of the beam by each of the sensors 5b and 5c installed at the right of the mobile body 100 may be changed to the right of the mobile body 100. For example, in the case where the mobile body 100 changes course to the right in the situation illustrated in FIG. 8, the direction of the beam by the sensor 5b may deviate a little clockwise from the reference direction Dbn. In the case where the mobile body 100 changes course to the right in the situation illustrated in FIG. 8, the direction of the beam by the sensor 5c may deviate a little counterclockwise from the reference direction Dcn.

For example, in the case where the mobile body 100 accelerates in the situation illustrated in FIG. 7, the object detection range of each of the sensors 5a and 5b installed at the front of the mobile body 100 may be changed to be wider. In the case where the mobile body 100 accelerates, the object detection distance of each of the sensors 5a and 5b installed at the front of the mobile body 100 may be changed to be longer. For example, in the case where the mobile body 100 decelerates in the situation illustrated in FIG. 7, the object detection range of each of the sensors 5c and 5d installed at the back of the mobile body 100 may be changed to be wider. In the case where the mobile body 100 decelerates, the object detection distance of each of the sensors 5c and 5d installed at the back of the mobile body 100 may be changed to be longer.

Thus, the main controller 50 in the electronic device 1 according to the embodiment may control each of the plurality of sensors 5 to perform a predetermined operation, based on the behavior of the mobile body 100 in which the electronic device 1 is mounted. In this case, the behavior of the mobile body 100 may be determined based on, for example, information supplied from the main controller, e.g. the ECU 50, mounted in the mobile body 100.

The main controller 50 in the electronic device 1 according to the embodiment can independently control each of the plurality of sensors 5. For example, the electronic device 1 may independently control the on/off state of each of the plurality of sensors 5. For example, the electronic device 1 may independently control at least one of the beam width and the reaching distance of the transmission waves transmitted from each of the plurality of sensors 5. For example, the electronic device 1 may independently control the operation mode (e.g. normal mode/BF mode) of each of the plurality of sensors 5. For example, the electronic device 1 may independently control the beamforming direction of the transmission waves transmitted from each of the plurality of sensors 5. By appropriately controlling, for example, the beam width and/or the reaching distance of the transmission waves transmitted from each of the plurality of sensors 5, the electronic device 1 according to the embodiment can perform object detection substantially all around the mobile body 10 in FIG. 7 or 8.

In the case of independently controlling each of the plurality of sensors 5 as mentioned above, if the sensors 5 perform detection at the same timing using the same frequency, there is risk of interference in the object detection by the plurality of sensors 5. In view of this, for example, in the case of independently controlling each of the plurality of sensors 5, the main controller 50 in the electronic device 1 according to the embodiment may cause the timing of detection by each sensor 5 to be different. For example, the main controller 50 in the electronic device 1 according to the embodiment may assign the detection by each of the different sensors 5 to a different one of a plurality of frames of the transmission waves T.

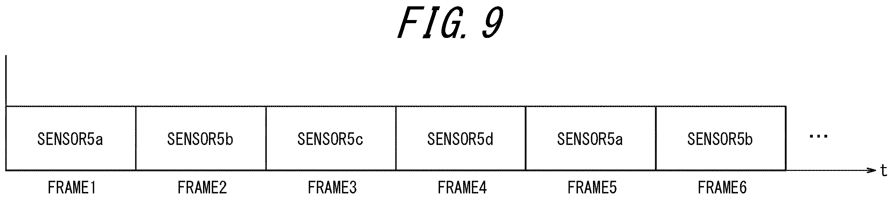

FIGS. 9 to 11 are each a diagram illustrating how the detection by each of the plurality of sensors 5 is set (assigned) in, for example, a different frame of the transmission waves T.

FIG. 9 is a diagram illustrating frames of the transmission waves T, as in FIG. 3. Although frames 1 to 6 of the transmission waves T are illustrated in the example in FIG. 9, subsequent frames may follow. Each frame illustrated in FIG. 9 may include, for example, 16 subframes, as in the frame 1 illustrated in FIG. 3. In this case, each of the subframes may include, for example, eight chirp signals, as in each subframe illustrated in FIG. 3.

For example, the electronic device 1 according to the embodiment may set (assign) the detection by different radar from among the plurality of sensors 5 in a different frame of the transmission waves T, as illustrated in FIG. 9. For example, the electronic device 1 according to the embodiment may set one sensor that performs object detection from among the plurality of sensors 5, for each frame of the transmission waves T. Thus, the main controller 50 in the electronic device 1 according to the embodiment may cause each of the plurality of sensors 5 to perform detection in a different frame of the transmission waves T. That is, the main controller 50 in the electronic device 1 according to the embodiment may switch among the plurality of sensors 5 for each frame of the transmission waves T and perform the transmission of the transmission signal and the reception of the reception signal.

In the example illustrated in FIG. 9, the detection by the sensor 5a is set in the frame 1 of the transmission waves T, the detection by the sensor 5b is set in the frame 2 of the transmission waves T, the detection by the sensor 5c is set in the frame 3 of the transmission waves T, and the detection by the sensor 5d is set in the frame 4 of the transmission waves T. This is repeated in the subsequent frames. In an embodiment, each frame of the transmission waves T may be, for example, on the order of tens of microseconds. Hence, the electronic device 1 according to the embodiment performs detection by the different sensors at very short time intervals. With the electronic device 1 according to the embodiment, even when the plurality of sensors 5 are each independently controlled to perform detection using the same frequency, the risk of interference in the object detection by the plurality of sensors 5 can be reduced.

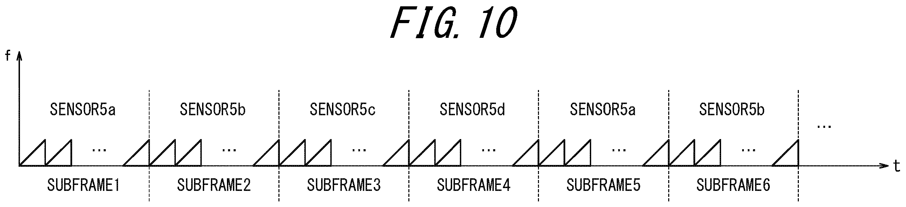

FIG. 10 is a diagram illustrating subframes included in a frame of the transmission waves T, as in FIG. 3. Although subframes 1 to 6 of the transmission waves T are illustrated in the example in FIG. 10, subsequent subframes may follow. The subframes 1 to 6 illustrated in FIG. 10 may be part of the 16 subframes included in the frame 1 illustrated in FIG. 3. For example, each subframe illustrated in FIG. 10 may include eight chirp signals, as in the subframes illustrated in FIG. 3.

For example, the electronic device 1 according to the embodiment may set (assign) the detection by a different sensor 5 in a different subframe of the transmission waves T, as illustrated in FIG. 10. For example, the electronic device 1 according to the embodiment may set the detection by one of the plurality of sensors 5, for each subframe of the transmission waves T. Thus, the main controller 50 in the electronic device 1 according to the embodiment may set the detection by one of the plurality of sensors 5 for each portion (e.g. subframe) constituting a frame of the transmission waves T. In the example illustrated in FIG. 10, the detection by the sensor 5a is set in the subframe 1 of the transmission waves T, the detection by the sensor 5b is set in the subframe 2 of the transmission waves T, and the detection by the sensor 5c is set in the subframe 3 of the transmission waves T. This is repeated in the subsequent subframes. In an embodiment, each subframe of the transmission waves T may be, for example, shorter in time than one frame. Hence, the electronic device 1 according to the embodiment can perform detection by the different sensors at shorter time intervals.

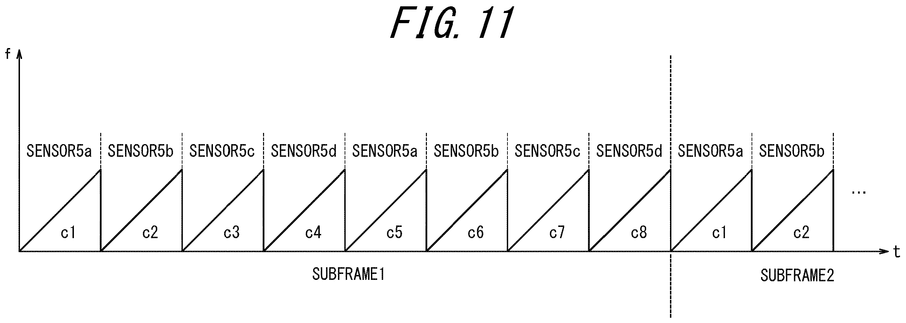

FIG. 11 is a diagram illustrating chirp signals included in a subframe of the transmission waves T, as in FIG. 3. Although a subframe 1 to part of a subframe 2 of the transmission waves T are illustrated in the example in FIG. 11, subsequent subframes may equally follow the subframe 1. The subframe 1 illustrated in FIG. 11 may include eight chirp signals, as in the subframe 1 illustrated in FIG. 3. The chirp signals illustrated in FIG. 11 may be the same as the eight chirp signals included in each subframe illustrated in FIG. 3.

For example, the electronic device 1 according to the embodiment may set (assign) the detection by a different sensor 5 in a different chirp signal included in a subframe of the transmission waves T, as illustrated in FIG. 11. For example, the electronic device 1 according to the embodiment may set the detection by one of the plurality of sensors 5, for each chirp signal of the transmission waves T. Thus, the main controller 50 in the electronic device 1 according to the embodiment may set the detection by one of the plurality of sensors 5 for each chirp signal constituting a frame of the transmission waves T. In the example illustrated in FIG. 11, the detection by the sensor 5a is set in the chirp signal c1 of the transmission waves T, the detection by the sensor 5b is set in the chirp signal c2 of the transmission waves T, and the detection by the sensor 5c is set in the chirp signal c3 of the transmission waves T. This is repeated in the subsequent subframes. In an embodiment, each chirp signal of the transmission waves T may be, for example, shorter in time than one subframe. Hence, the electronic device 1 according to the embodiment can perform detection by the different sensors at shorter time intervals.

In the above-described example, the risk of interference in the object detection by the plurality of sensors 5 is reduced by making the timing of detection by each of the plurality of sensors 5 different. The risk of interference in the object detection by the plurality of sensors 5 can also be reduced by making the frequency of the radio waves used for detection by each of the plurality of sensors 5 different. For example, object detection may be started after setting the frequency (band) of the radio waves used for detection to be different between the plurality of sensors 5. In detail, in FIG. 7 or 8, each of the sensors 5a, 5b, 5c, and 5d may perform object detection independently, using a different frequency (band). Thus, the main controller 50 in the electronic device 1 according to the embodiment may cause each of the plurality of sensors 5 to perform detection using transmission waves of a different frequency. With the electronic device 1 according to the embodiment, even when the plurality of sensors 5 are each independently controlled to perform detection at the same timing, the risk of interference in the object detection by the plurality of sensors 5 can be reduced.

In the example illustrated in each of FIGS. 9 to 11, the detection by the plurality of sensors 5 is sequentially (evenly) assigned to different frames or the like of the transmission waves T. When assigning the detection by the plurality of sensors 5 to different frames or the like of the transmission waves T, however, the plurality of sensors 5 may be not assigned evenly.

For example, in the situation illustrated in FIG. 7, the detection by the sensors 5b and 5c installed at the right of the mobile body 100 may be prioritized over the detection by the sensors 5a and 5d installed at the left of the mobile body 100.

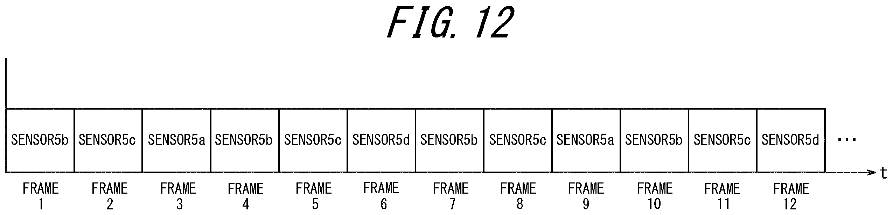

FIG. 12 is a diagram illustrating an example in which the detection by one of the plurality of sensors 5 is assigned to each frame of the transmission waves T. The description of the parts same as or similar to those described with reference to FIG. 9 will be simplified or omitted in FIG. 12.

In the frames of the transmission waves T illustrated in FIG. 12, the same assignment is made to the frames 1 to 6 and to the frames 7 to 12. The same assignment may be made to the frames following the frame 12.

As illustrated in FIG. 12, in the frames 1 to 6, the detection by the sensors 5b and 5c is included twice, whereas the detection by the sensors 5a and 5d is included once. By such assignment to the frames, the detection by the sensors 5b and 5c installed at the right of the mobile body 100 can be prioritized over the detection by the sensors 5a and 5d installed at the left of the mobile body 100. Such assignment may be triggered, for example, by detection of a change of course to the right by the mobile body 100 in FIG. 7. In detail, in the case where the mobile body 100 changes course to the right in the situation illustrated in FIG. 7, the detection by the sensors 5b and 5c installed at the right of the mobile body 100 may be prioritized over the detection by the sensors 5a and 5d installed at the left of the mobile body 100.

Thus, for example, the main controller 50 in the electronic device 1 according to the embodiment may control the plurality of sensors 5 with different priority levels depending on the direction of travel of the mobile body 100 in which the electronic device 1 is mounted. For example, the operation of one or more sensors (e.g. the sensors 5b and 5c) corresponding to the direction of travel of the mobile body 100 from among the plurality of sensors 5 may be prioritized over the operation of one or more sensors (e.g. the sensors 5a and 5d) other than the sensors corresponding to the direction of travel of the mobile body 100 from among the plurality of sensors 5.

As described above, the electronic device 1 according to the embodiment can perform a variety of control on the plurality of sensors 5 independently of each other, triggered by any of various events. The electronic device 1 according to the embodiment can thus improve convenience in object detection by the plurality of sensors.

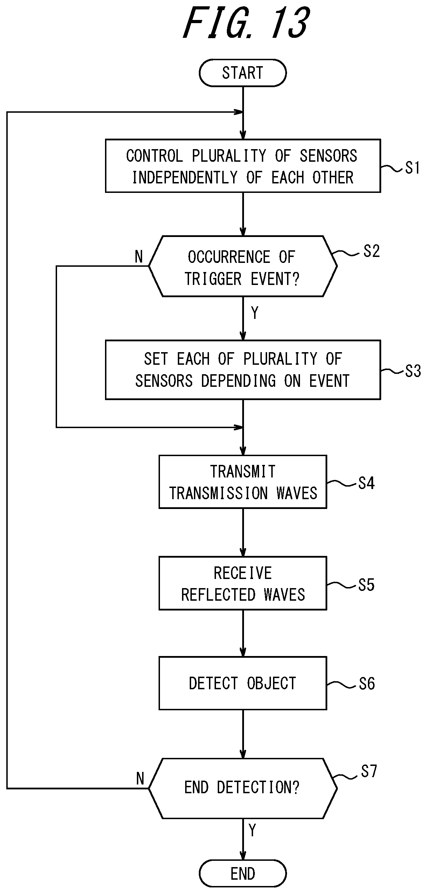

FIG. 13 is a flowchart illustrating operation of the electronic device according to the embodiment. The flow of operation of the electronic device according to the embodiment will be described below.

The operation illustrated in FIG. 13 may be started, for example, when detecting an object around the mobile body 100 by the electronic device 1 mounted in the mobile body 100.

After the operation illustrated in FIG. 13 starts, the main controller 50 controls the plurality of sensors 5 independently of each other (step S1). For example, in step S1, the main controller 50 may perform various control on each of the plurality of sensors 5, as described above with reference to FIG. 7 or 8. In step S1, the detection range determination unit 15 may determine an object detection range set by default, for each of the plurality of sensors 5. In step S1, the detection range determination unit 15 may determine the object detection range based on, for example, an operation of the driver of the mobile body 100 or an instruction of the controller 10 or the ECU 50.

The operation in step S1 may be not an operation performed for the first time after the start of the operation illustrated in FIG. 13, but an operation performed again after the operation illustrated in FIG. 13 has already been performed. In the case where, at the time when step S1 is performed again, there is already a result of detection of an object by the object detector 14, the detection range determination unit 15 may determine the object detection range based on the position of the detected object.

After the control of the plurality of sensors 5 starts in step S1, the main controller 50 determines whether a predetermined event as a trigger occurs (step S2). The predetermined event determined in step S2 may be, for example, the detection of an object, or a change in the position, distance, and/or relative speed of the detected object. The predetermined event determined in step S2 may be, for example, a change in the behavior of the mobile body 100 (e.g. turn, acceleration, deceleration, or gear change).

In the case where the event does not occur in step S2, the main controller 50 performs object detection operation from step S4 onward, while maintaining the setting of the control started in step S1.

In the case where the event occurs in step S2, the main controller 50 sets each of the plurality of sensors 5 to perform a predetermined operation, depending on the event (step S3). The predetermined operation by each of the plurality of sensors 5 may be, for example, any of various operations described with reference to FIGS. 7 to 12. The setting for the plurality of sensors 5 performed in step S2 may be to change the preceding control set for the plurality of sensors 5.

After the plurality of sensors 5 are set in step S3, the main controller 50 performs control to transmit the transmission waves T from the transmission antenna 25 (step S4). In the case of performing beamforming of the transmission waves T, in step S4, the phase controller 23 (transmission controller) may control the phase of the transmission waves T transmitted from each of the plurality of transmission antennas 25 so that the transmission waves T transmitted from the plurality of transmission antennas 25 will form a beam in a predetermined direction. The phase controller 23 (transmission controller) may also perform control to aim the beam of the transmission waves T in the direction of the object detection range so as to cover, for example, at least part of the object detection range.

After the transmission waves T are transmitted in step S4, the main controller 50 performs control to receive the reflected waves R by the reception antenna 31 (step S4).

After the reflected waves R are received in step S5, the main controller 50 detects an object present around the mobile body 100 (step S6). In step S6, the object detector 14 in the controller 10 may perform object detection in the object detection range set in step S3 (object detection range clipping). In step S6, the object detector 14 in the controller 10 may detect an object based on an estimation result of at least one of the distance FFT processor 11, the speed FFT processor 12, and the arrival angle estimation unit 13. Since the object detection in step S6 can be performed using a known millimeter wave radar technique according to any of various algorithms, more detailed description is omitted.

After the object detection is performed in step S6, the main controller 50 determines whether to end the object detection by the plurality of sensors 5 (step S7). In the case of not ending the detection in step S7, the main controller 50 may return to step S1 and repeat the operation. In the case of ending the detection in step S7, the main controller 50 may end the operation illustrated in FIG. 13.

The foregoing embodiment is not limited to implementation as the electronic device 1. For example, the foregoing embodiment may be implemented as a control method of a device such as the electronic device 1. For example, the foregoing embodiment may be implemented as a control program of a device such as the electronic device 1.

### REFERENCE SIGNS LIST

- 1: electronic device
- 5: sensor
- 10: controller
- 11: distance FFT processor
- 12: speed FFT processor
- 13: arrival angle estimation unit
- 14: object detector
- 15: detection range determination unit
- 16: parameter setting unit
- 20: transmitter
- 21: signal generator
- 22: synthesizer
- 23: phase controller
- 24: amplifier
- 25: transmission antenna
- 30: receiver
- 31: reception antenna
- 32: LNA
- 33: mixer
- 34: IF unit
- 35: AD converter
- 40: memory
- 50: ECU (main controller)
- 82: steering
- 84: gear
- 100: mobile body
- 200: object

## Claims

1. An electronic device (1) comprising:
a plurality of sensors (5; 5a, 5b, 5c, 5d) each configured to detect, based on a transmission signal transmitted from a transmission antenna (25) as transmission waves and a reception signal received by a reception antenna (31) as reflected waves, an object (200) reflecting the transmission waves; and
a main controller (50) configured to control the plurality of sensors (5; 5a, 5b, 5c, 5d) independently of each other, wherein
the plurality of sensors (5; 5a, 5b, 5c, 5d) are installed to a mobile body (100) which can change course in a predetermined direction wherein at least one sensor (5) of the plurality of sensors (5; 5a, 5b, 5c, 5d) is installed to the predetermined direction side relative to a center of the mobile body (100),
**characterized in that**
the main controller (50) controls the at least one sensor (5) to beamform transmission waves transmitted from the at least one sensor (5) in the predetermined direction relative to the mobile body (100),
the main controller (50) controls the plurality of sensors (5; 5a, 5b, 5c, 5d) to change an object detection range of each of the plurality of sensors (5; 5a, 5b, 5c, 5d) independently of each other, based on the object (200) detected by each of the plurality of sensors (5; 5a, 5b, 5c, 5d), and
the main controller (50) controls each of the plurality of sensors (5; 5a, 5b, 5c, 5d) to perform detection using transmission waves of a different frequency.

2. The electronic device (1) according to claim 1, wherein the main controller (50) is configured to control each of the plurality of sensors (5; 5a, 5b, 5c, 5d) to perform detection in a different frame of the transmission waves.

3. The electronic device (1) according to claim 1 or 2, wherein the main controller (50) is configured to perform control so that an operation of a sensor (5) from among the plurality of sensors (5; 5a, 5b, 5c, 5d) will be different from an operation of an other sensor (5) from among the plurality of sensors (5; 5a, 5b, 5c, 5d).

4. The electronic device (1) according to any of claims 1 to 3, wherein the main controller (50) is configured to control each of the plurality of sensors (5; 5a, 5b, 5c, 5d) to perform a predetermined operation, based on an occurrence of a predetermined event.

5. The electronic device (1) according to claim 4, wherein the main controller (50) is configured to control each of the plurality of sensors (5; 5a, 5b, 5c, 5d) to perform the predetermined operation, based on detection of the object (200).

6. The electronic device (1) according to claim 4, wherein the main controller (50) is configured to control each of the plurality of sensors (5; 5a, 5b, 5c, 5d) to perform the predetermined operation, based on a behavior of the mobile body (100) in which the electronic device (1) is mounted.

7. The electronic device (1) according to claim 6, wherein the main controller (50) is configured to perform control to, depending on a direction of travel of the mobile body (100) in which the electronic device (1) is mounted, prioritize an operation of a sensor (5) corresponding to the direction of travel from among the plurality of sensors (5; 5a, 5b, 5c, 5d) over an operation of a sensor (5) other than the sensor (5) corresponding to the direction of travel from among the plurality of sensors (5; 5a, 5b, 5c, 5d).

8. A control method of an electronic device (1), comprising:
detecting, based on a transmission signal transmitted from a transmission antenna (25) as transmission waves and a reception signal received by a reception antenna (31) as reflected waves, an object (200) reflecting the transmission waves, by each of a plurality of sensors (5; 5a, 5b, 5c, 5d); and
controlling the plurality of sensors (5; 5a, 5b, 5c, 5d) independently of each other,
wherein the plurality of sensors (5; 5a, 5b, 5c, 5d) are installed to a mobile body (100) which can change course in a predetermined direction wherein at least one sensor (5) of the plurality of sensors (5; 5a, 5b, 5c, 5d) is installed to the predetermined direction side relative to a center of the mobile body (100),
**characterized in that** the method further comprises:
controlling the at least one sensor (5) to beamform transmission waves transmitted from the at least one sensor (5) in the predetermined direction relative to the mobile body (100),
controlling the plurality of sensors (5; 5a, 5b, 5c, 5d) to change an object detection range of each of the plurality of sensors (5; 5a, 5b, 5c, 5d) independently of each other, based on the object (200) detected by each of the plurality of sensors (5; 5a, 5b, 5c, 5d), and
controlling each of the plurality of sensors (5; 5a, 5b, 5c, 5d) to perform detection using transmission waves of a different frequency.

9. A control program of an electronic device (1) according to claim 1, causing the electronic device (1) to execute:
detecting, based on a transmission signal transmitted from a transmission antenna (25) as transmission waves and a reception signal received by a reception antenna (31) as reflected waves, an object (200) reflecting the transmission waves, by each of a plurality of sensors (5; 5a, 5b, 5c, 5d); and
controlling the plurality of sensors (5; 5a, 5b, 5c, 5d) independently of each other,
wherein the plurality of sensors (5; 5a, 5b, 5c, 5d) are installed to a mobile body (100) which can change course in a predetermined direction wherein at least one sensor (5) is installed to the predetermined direction side relative to a center of the mobile body (100),
**characterized in that** the program further causes the computer to execute:
controlling the at least one sensor (5) to beamform transmission waves transmitted from the at least one sensor (5) in the predetermined direction relative to the mobile body (100),
controlling the plurality of sensors (5; 5a, 5b, 5c, 5d) to change an object detection range of each of the plurality of sensors (5; 5a, 5b, 5c, 5d) independently of each other, based on the object (200) detected by each of the plurality of sensors (5; 5a, 5b, 5c, 5d), and
controlling each of the plurality of sensors (5; 5a, 5b, 5c, 5d) to perform detection using transmission waves of a different frequency.

## Patentansprüche

1. Elektronische Vorrichtung (1), aufweisend:
eine Mehrzahl von Sensoren (5; 5a, 5b, 5c, 5d), die jeweils konfiguriert sind, um basierend auf einem von einer Sendeantenne (25) als Sendewellen gesendeten Sendesignal und einem von einer Empfangsantenne (31) als reflektierte Wellen empfangenen Empfangssignal ein Objekt (200) zu detektieren, das die Sendewellen reflektiert, und
eine Hauptsteuereinrichtung (50), die konfiguriert ist, um die Mehrzahl von Sensoren (5; 5a, 5b, 5c, 5d) unabhängig voneinander zu steuern, wobei
die Mehrzahl von Sensoren (5; 5a, 5b, 5c, 5d) an einem mobilen Körper (100) installiert ist, der einen Kurs in einer vorbestimmten Richtung ändern kann, wobei mindestens ein Sensor (5) der Mehrzahl von Sensoren (5; 5a, 5b, 5c, 5d) auf der vorbestimmte-Richtung-Seite relativ zu einer Mitte des mobilen Körpers (100) installiert ist,
**dadurch gekennzeichnet, dass**
die Hauptsteuereinrichtung (50) den mindestens einen Sensor (5) steuert, um von dem mindestens einen Sensor (5) in der vorbestimmten Richtung relativ zu dem mobilen Körper (100) ausgesendete Sendewellen zu strahlformen,
wobei die Hauptsteuereinrichtung (50) die Mehrzahl von Sensoren (5; 5a, 5b, 5c, 5d) steuert, um einen Objektdetektionsbereich von jedem aus der Mehrzahl von Sensoren (5; 5a, 5b, 5c, 5d) unabhängig voneinander zu ändern, basierend auf dem von jedem aus der Mehrzahl von Sensoren (5; 5a, 5b, 5c, 5d) detektierten Objekt (200), und
die Hauptsteuereinrichtung (50) jeden aus der Mehrzahlen von Sensoren (5; 5a, 5b, 5c, 5d) steuert, um eine Detektion mittels Sendewellen einer anderen Frequenz durchzuführen.

2. Elektronische Vorrichtung (1) gemäß Anspruch 1, wobei die Hauptsteuereinrichtung (50) konfiguriert ist, um jeden aus der Mehrzahl von Sensoren (5; 5a, 5b, 5c, 5d) zu steuern, um eine Detektion in einem anderen Frame der Sendewellen durchzuführen.

3. Elektronische Vorrichtung (1) gemäß Anspruch 1 oder 2, wobei die Hauptsteuereinrichtung (50) konfiguriert ist, um eine Steuerung durchzuführen, so dass sich ein Betrieb eines Sensors (5) aus der Mehrzahl von Sensoren (5; 5a, 5b, 5c, 5d) von einem Betrieb eines anderen Sensors (5) aus der Mehrzahl von Sensoren (5; 5a, 5b, 5c, 5d) unterscheidet.

4. Elektronische Vorrichtung (1) gemäß irgendeinem der Ansprüche 1 bis 3, wobei die Hauptsteuereinrichtung (50) konfiguriert ist, um jeden aus der Mehrzahl von Sensoren (5; 5a, 5b, 5c, 5d) zu steuern, um einen vorbestimmten Betrieb durchzuführen, basierend auf einem Auftreten eines vorbestimmten Ereignisses.

5. Elektronische Vorrichtung (1) gemäß Anspruch 4, wobei die Hauptsteuereinrichtung (50) konfiguriert ist, um jeden aus der Mehrzahl von Sensoren (5; 5a, 5b, 5c, 5d) zu steuern, um den vorbestimmten Betrieb auszuführen, basierend auf einer Detektion des Objekts (200).

6. Elektronische Vorrichtung (1) gemäß Anspruch 4, wobei die Hauptsteuereinrichtung (50) konfiguriert ist, um jeden aus der Mehrzahl von Sensoren (5; 5a, 5b, 5c, 5d) zu steuern, um den vorbestimmten Betrieb durchzuführen, basierend auf einem Verhalten des mobilen Körpers (100), in dem die Vorrichtung (1) montiert ist.

7. Elektronische Vorrichtung (1) gemäß Anspruch 6, wobei die Hauptsteuereinrichtung (50) konfiguriert ist, um eine Steuerung durchzuführen, um in Abhängigkeit von einer Fahrtrichtung des mobilen Körpers (100), in dem die elektronische Vorrichtung (1) montiert ist, einen Betrieb eines Sensors (5) aus der Mehrzahl von Sensoren (5; 5a, 5b, 5c, 5d), der mit der Fahrtrichtung korrespondiert, gegenüber einem Betrieb eines anderen Sensors (5) aus der Mehrzahl von Sensoren (5; 5a, 5b, 5c, 5d) als dem Sensor (5), der mit der Fahrtrichtung korrespondiert, zu priorisieren.

8. Steuerverfahren für eine elektronische Vorrichtung (1), aufweisend:
Detektieren eines Objekts (200), das die Sendewellen reflektiert, durch jeden aus einer Mehrzahl von Sensoren (5; 5a, 5b, 5c, 5d) basierend auf einem von einer Sendeantenne (25) als Sendewellen gesendeten Sendesignal und einem von einer Empfangsantenne (31) als reflektierte Wellen empfangenen Empfangssignal; und
Steuern der Mehrzahl von Sensoren (5; 5a, 5b, 5c, 5d) unabhängig voneinander;
wobei die Mehrzahl von Sensoren (5; 5a, 5b, 5c, 5d) an einem mobilen Körper (100) installiert ist, der einen Kurs in einer vorbestimmten Richtung ändern kann, wobei mindestens ein Sensor (5) der Mehrzahl von Sensoren (5; 5a, 5b, 5c, 5d) auf der vorbestimmte-Richtung-Seite relativ zu einer Mitte des mobilen Körpers (100) installiert ist,
**dadurch gekennzeichnet, dass** das Verfahren ferner aufweist:
Steuern des mindestens einen Sensors (5), um von dem mindestens einen Sensor (5) in der vorbestimmten Richtung relativ zu dem mobilen Körper (100) gesendete Sendewellen zu strahlformen,
Steuern der Mehrzahl von Sensoren (5; 5a, 5b, 5c, 5d) um einen Objektdetektionsbereich von jedem aus der Mehrzahl von Sensoren (5; 5a, 5b, 5c, 5d) unabhängig voneinander zu steuern, basierend auf dem von jedem aus der Mehrzahl von Sensoren (5; 5a, 5b, 5c, 5d) detektierten Objekt, und
Steuern von jedem aus der Mehrzahl von Sensoren (5; 5a, 5b, 5c, 5d), um eine Detektion mittels Sendewellen einer anderen Frequenz durchzuführen.

9. Steuerprogramm einer elektronischen Vorrichtung (1) gemäß Anspruch 1, das die Vorrichtung (1) dazu veranlasst, durchzuführen:
Detektieren eines Objekts (200), das die Sendewellen reflektiert, durch jeden aus einer Mehrzahl von Sensoren (5; 5a, 5b, 5c, 5d), basierend auf einem von einer Sendeantenne (25) als Sendewellen gesendeten Sendesignal und einem von einer Empfangsantenne (31) als reflektierte Wellen empfangenen Empfangssignal; und
Steuern der Mehrzahl von Sensoren (5; 5a, 5b, 5c, 5d) unabhängig voneinander,
wobei die Mehrzahl von Sensoren (5; 5a, 5b, 5c, 5d) an einem mobilen Körper (100) installiert ist, der einen Kurs in einer vorbestimmten Richtung ändern kann, wobei mindestens ein Sensor (5) auf der vorbestimmte-Richtung-Seite relativ zu einer Mitte des mobilen Körpers (100) installiert ist,
**dadurch gekennzeichnet, dass** das Programm ferner den Computer veranlasst, durchzuführen:
Steuern des mindestens einen Sensors (5), um von dem mindestens einen Sensor (5) in der vorbestimmten Richtung relativ zu dem mobilen Körper (100) ausgesendete Sendewellen zu strahlformen,
Steuern der Mehrzahl von Sensoren (5; 5a, 5b, 5c, 5d), um einen Objektdetektionsbereich von jedem aus der Mehrzahl von Sensoren (5; 5a, 5b, 5c, 5d) (5; 5a, 5b, 5c, 5d) unabhängig voneinander zu ändern, basierend auf dem von jedem aus der Mehrzahl von Sensoren (5; 5a, 5b, 5c, 5d) detektierten Objekt (200), und
Steuern von jedem aus der Mehrzahl von Sensoren (5; 5a, 5b, 5c, 5d) um ein Detektieren mittels Sendewellen einer anderen Frequenz durchzuführen.

## Revendications

1. Dispositif électronique (1), comprenant :
une pluralité de capteurs (5 ; 5a, 5b, 5c, 5d) configurés chacun pour détecter, sur la base d'un signal de transmission transmis depuis une antenne de transmission (25) sous forme d'ondes de transmission et d'un signal de réception reçu par une antenne de réception (31) sous forme d'ondes réfléchies, un objet (200) réfléchissant les ondes de transmission ; et
un contrôleur principal (50) configuré pour contrôler la pluralité de capteurs (5 ; 5a, 5b, 5c, 5d) indépendamment les uns des autres, dans lequel
la pluralité de capteurs (5 ; 5a, 5b, 5c, 5d) sont installés sur un corps mobile (100) qui peut changer de trajectoire dans une direction prédéterminée, dans lequel au moins un capteur (5) de la pluralité de capteurs (5 ; 5a, 5b, 5c, 5d) est installé sur le côté de direction prédéterminée par rapport à un centre du corps mobile (100),
**caractérisé en ce que**
le contrôleur principal (50) contrôle l'au moins un capteur (5) pour une formation de faisceau d'ondes de transmission transmises depuis l'au moins un capteur (5) dans la direction prédéterminée par rapport au corps mobile (100),
le contrôleur principal (50) contrôle la pluralité de capteurs (5 ; 5a, 5b, 5c, 5d) pour modifier une plage de détection d'objet de chacun de la pluralité de capteurs (5 ; 5a, 5b, 5c, 5d) indépendamment les uns des autres, sur la base de l'objet (200) détecté par chacun de la pluralité de capteurs (5 ; 5a, 5b, 5c, 5d), et
le contrôleur principal (50) contrôle chacun parmi la pluralité de capteur (5 ; 5a, 5b, 5c, 5d) pour effectuer une détection en utilisant des ondes de transmission d'une fréquence différente.

2. Dispositif électronique (1) selon la revendication 1, dans lequel le contrôleur principal (50) est configuré pour contrôler chacun de la pluralité de capteurs (5 ; 5a, 5b, 5c, 5d) pour effectuer une détection dans une trame différente des ondes de transmission.

3. Dispositif électronique (1) selon la revendication 1 ou 2, dans lequel le contrôleur principal (50) est configuré pour effectuer un contrôle de telle sorte qu'un fonctionnement d'un capteur (5) parmi la pluralité de capteurs (5 ; 5a, 5b, 5c, 5d) soit différent d'un fonctionnement d'un autre capteur (5) parmi la pluralité de capteurs (5 ; 5a, 5b, 5c, 5d).

4. Dispositif électronique (1) selon l'une quelconque des revendications 1 à 3, dans lequel le contrôleur principal (50) est configuré pour contrôler chacun de la pluralité capteurs (5 ; 5a, 5b, 5c, 5d) pour effectuer le fonctionnement prédéterminé, sur la base d'une survenue d'un événement prédéterminé.

5. Dispositif électronique (1) selon la revendication 4, dans lequel le contrôleur principal (50) est configuré pour contrôler chacun de la pluralité de capteurs (5 ; 5a, 5b, 5c, 5d) pour effectuer le fonctionnement prédéterminé, sur la base d'une détection de l'objet (200).

6. Dispositif électronique (1) selon la revendication 4, dans lequel le contrôleur principal (50) est configuré pour contrôler chacun de la pluralité de capteurs (5 ; 5a, 5b, 5c, 5d) pour effectuer le fonctionnement prédéterminé, sur la base d'un comportement du corps mobile (100) dans lequel le dispositif électronique (1) est monté.

7. Dispositif électronique (1) selon la revendication 6, dans lequel le contrôleur principal (50) est configuré pour effectuer un contrôle afin, en fonction d'une direction de déplacement du corps mobile (100) dans lequel le dispositif électronique (1) est monté, de donner la priorité à un fonctionnement d'un capteur (5) correspondant à la direction de déplacement parmi la pluralité de capteurs (5 ; 5a, 5b, 5c, 5d) par rapport à un fonctionnement d'un capteur (5) autre que le capteur (5) correspondant à la direction de déplacement parmi la pluralité de capteurs (5 ; 5a, 5b, 5c, 5d).

8. Procédé de contrôle d'un dispositif électronique (1), comprenant :
la détection, sur la base d'un signal de transmission transmis depuis une antenne de transmission (25) sous forme d'ondes de transmission et d'un signal de réception reçu par une antenne de réception (31) sous forme d'ondes réfléchies, d'un objet (200) réfléchissant les ondes de transmission, par chacun d'une pluralité de capteurs (5 ; 5a, 5b, 5c, 5d) ; et
la contrôle de la pluralité de capteurs (5 ; 5a, 5b, 5c, 5d) indépendamment les uns des autres,
dans lequel la pluralité de capteurs (5 ; 5a, 5b, 5c, 5d) sont installés sur un corps mobile (100) qui peut changer de trajectoire dans une direction prédéterminée, dans lequel au moins un capteur (5) de la pluralité de capteurs (5 ; 5a, 5b, 5c, 5d) est installé sur le côté de direction prédéterminée par rapport à un centre du corps mobile (100),
**caractérisé en ce que** le procédé comprend en outre :
le contrôle dudit au moins un capteur (5) pour une formation de faisceau d'ondes de transmission transmises depuis ledit au moins un capteur (5) dans la direction prédéterminée par rapport au corps mobile (100),
le contrôle de la pluralité de capteurs (5 ; 5a, 5b, 5c, 5d) pour modifier une plage de détection d'objet de chacun de la pluralité de capteurs (5 ; 5a, 5b, 5c, 5d) indépendamment les uns des autres, sur la base de l'objet (200) détecté par chacun de la pluralité de capteurs (5 ; 5a, 5b, 5c, 5d), et
le contrôle de chacun de la pluralité de capteurs (5 ; 5a, 5b, 5c, 5d) pour effectuer une détection en utilisant des ondes de transmission d'une fréquence différente.

9. Programme de contrôle d'un dispositif électronique (1) selon la revendication 1, amenant le dispositif électronique (1) à exécuter :
la détection, sur la base d'un signal de transmission transmis depuis une antenne de transmission (25) sous forme d'ondes de transmission et d'un signal de réception reçu par une antenne de réception (31) sous forme d'ondes réfléchies, d'un objet (200) réfléchissant les ondes de transmission, par chacun d'une pluralité de capteurs (5 ; 5a, 5b, 5c, 5d) ; et
le contrôle de la pluralité de capteurs (5 ; 5a, 5b, 5c, 5d) indépendamment les uns des autres,
dans lequel la pluralité de capteurs (5 ; 5a, 5b, 5c, 5d) sont installés sur un corps mobile (100) qui peut changer de trajectoire dans une direction prédéterminée, dans lequel au moins un capteur (5) est installé sur le côté de direction prédéterminée par rapport à un centre du corps mobile (100),
**caractérisé en ce que** le programme amène en outre l'ordinateur à exécuter :
le contrôle dudit au moins un capteur (5) pour une formation de faisceau d'ondes de transmission transmises depuis ledit au moins un capteur (5) dans la direction prédéterminée par rapport au corps mobile (100),
le contrôle de la pluralité de capteurs (5 ; 5a, 5b, 5c, 5d) pour modifier une plage de détection d'objet de chacun de la pluralité de capteurs (5 ; 5a, 5b, 5c, 5d) indépendamment les uns des autres, sur la base de l'objet (200) détecté par chacun de la pluralité de capteurs (5 ; 5a, 5b, 5c, 5d), et
le contrôle de chacun de la pluralité de capteurs (5 ; 5a, 5b, 5c, 5d) pour effectuer une détection en utilisant des ondes de transmission d'une fréquence différente.
